# EUROPÄISCHE PATENTSCHRIFT

(11) **EP 4 082 995 B1**
(45) Veröffentlichungstag und Bekanntmachung des Hinweises auf die Patenterteilung: **31.01.2024**
(21) Anmeldenummer: 21171695.6
(22) Anmeldetag: 30.04.2021
(51) Int. Cl.: C04B 40/00, C04B 103/14, C04B 111/00

(54) **VISKOSITÄTSVERRINGERUNG VON ALUMINIUMSULFATSUSPENSIONEN MIT ALKALIMETALLVERBINDUNGEN**
VISCOSITY REDUCTION OF ALUMINUM SULFATE SUSPENSIONS WITH ALKALI METAL COMPOUNDS
RÉDUCTION DE LA VISCOSITÉ DES SUSPENSIONS DE SULFATE D'ALUMINIUM AVEC DES COMPOSÉS DE MÉTAL ALCALIN

(43) Veröffentlichungstag der Anmeldung: 02.11.2022
(73) Patentinhaber: Sika Technology AG, 6340 Baar (CH)
(72) Erfinder: WEIBEL, Martin, 8048 Zürich (CH); STENGER, Christian, 5024 Küttigen (CH)
(74) Vertreter: Sika Patent Attorneys

(56) Entgegenhaltungen:
- EP-A1- 0 017 634
- WO-A1-03/106375
- WO-A1-2009/121123
- CN-A- 104 370 489

## Beschreibung

### Technisches Gebiet

Die Erfindung betrifft Mittel zur Einstellung, insbesondere zur Reduktion, der Viskosität einer Aluminiumsulfatsuspension. Des Weiteren bezieht sich die Erfindung auf eine Aluminiumsulfatsuspension.

### Stand der Technik

Es sind viele Substanzen bekannt, welche das Erstarren und Erhärten von mineralischen Bindemittelzusammensetzungen beschleunigen. Bekannt sind beispielsweise stark alkalisch reagierende Stoffe wie Alkalihydroxide, Alkalicarbonate, Alkalisilikate, Alkalialuminate und Erdalkalichloride.

Es werden aber mehrheitlich alkalifreie Beschleuniger eingesetzt, wobei sich unter anderem Beschleuniger auf Basis von Aluminiumsulfatsuspensionen als besonders effektiv herausgestellt haben und ein gutes Preis/Leistungsverhältnis aufweisen. Problematisch bei solchen Beschleunigern ist jedoch, dass mit zunehmendem Aktivstoffgehalt, die Viskositäten der Beschleuniger stark zunehmen. Dies erschwert unter anderem die Herstellung, das exakte Zudosieren der Beschleuniger und die Mischbarkeit mit den zu beschleunigenden mineralischen Bindemittelzusammensetzungen.

Die WO 2005/075381 A1 beschreibt z.B. einen Erstarrungs- und Erhärtungsbeschleuniger umfassend Aluminiumhydroxid, Aluminiumsulfat und organische Säure, wobei der Beschleuniger ein Molverhältnis von Aluminium zur organischen Säure von kleiner als 0.65 aufweist.

Die EP 0 812 812 B1 offenbart alkalifreie Beschleunigerdispersionen basierend auf Aluminiumsulfat und einem Alkanolamin in Abwesenheit von Aluminiumhydroxid.

Grosse Mengen an Säuren und Alkanolaminen haben jedoch den Nachteil, dass aufgrund ihrer Auswaschbarkeit die Umwelt belastet werden kann. Sie sind zudem wegen ihrer Kosten nachteilig.

Die EP 1 878 713 A1 (Construction Research and Technology GmbH) beschreibt einen Beschleuniger für Spritzbeton oder Spritzmörtel in Form einer wässrigen Dispersion mit 25 bis 40 Gew.-% Aluminiumsulfat und Aluminiumhydroxid, wobei das molare Verhältnis von Aluminium zu Sulfat in der Dispersion 1.35 bis 0.70 beträgt. Zudem weist die wässrige Dispersion einen anorganischen Stabilisator auf, der ein Magnesiumsilikat in Form von Sepiolith umfasst. Wird Sepiolith mit einem Anteil von 0.2 - 3 Gew.-% eingesetzt, ergibt sich gemäss der EP 1 878 713 A1 nebst einer Stabilisierung der Dispersion in weiten Bereichen der vorgesehenen Aluminium- und Sulfatmengen auch eine vorteilhafte Viskosität des Spritzbetonbeschleunigers.

Nachteilig bei solchen Beschleunigern ist aber, dass zur Erreichung des hohen Aktivstoffgehalts zusätzliches Aluminiumhydroxid zugegeben und das Verhältnis von Aluminium zu Sulfat angehoben werden muss, was teilweise unerwünscht ist. Dies führt dazu, dass die Kosten für den Beschleuniger relativ hoch ausfallen, da Aluminiumhydroxid teuer ist. Zudem ist das als Stabilisator eingesetzte Magnesiumsilikat in Form von Sepiolith zwar ein sehr guter Stabilisator für Spritzbetonbeschleuninger, Sepiolith hat sich aber hinsichtlich Viskositätsreduktion als nicht wirksam herausgestellt. Im Gegenteil, die Zugabe von Sepiolith führt direkt nach der Herstellung stets zu einer Viskositätserhöhung der Aluminiumsulfatsuspension.

Damit lassen sich die Aluminiumsulfatsuspensionen zwar bei relativ hohem Aktivstoffgehalt stabilisieren, die Viskositäten solcher Aluminiumsulfatsuspensionen, insbesondere direkt nach der Herstellung, können aber nicht positiv beeinflusst oder gezielt eingestellt werden.

In der noch nicht veröffentlichen Patentanmeldung EP 19207659.4 des Anmelders konnte gezeigt werden, dass eine Reduktion der Viskosität von Aluminiumsulfatsuspensionen teilweise durch Zugabe von Magnesiumverbindungen erreicht werden kann.

Die WO 03/106375 (Construction Research and Technology GmbH) lehrt wässrige Lösungen oder Dispersionen von Aluminiumsulfat mit einem Gehalt an Aluminiumsulfat von 30 - 60 Gew.-%.

Die CN 104 370 489 (Hebei Tieyuan Science & Technology Dev Co Ltd.) beschreibt alkalifreie Beschleuniger für Spritzbeton mit einem Gehalt von 35 - 50 Gew.-% Aluminiumsulfat.

Die EP 0 017 634 (Boliden AB) offenbart wässrige Lösungen von Aluminiumsulfat als Koagulierungsmittel.

Die WO 2009/121123 (Ultimate Nominees Pty Ltd.) befasst sich mit Suspensionen enthaltend Aluminiumsulfatsalze und einen mineralischen Zusatzstoff ausgewählt aus Calciumsulfat, Kaolin, Feldspat, Bentonit, Talkum oder Zeolit.

Bezüglich der Reduzierung der Viskosität besteht aber weiterhin Bedarf nach Lösungen mit verbesserter Wirkung und auch nach kostengünstigeren Lösungen.

Es besteht deshalb weiterhin das Bedürfnis, nach neuen und verbesserten Lösungen, welche die vorstehend genannten Nachteile möglichst überwinden.

### Darstellung der Erfindung

Der Erfindung liegt die Aufgabe zugrunde, Lösungen bereitzustellen, welche die Herstellung von Aluminiumsulfatsuspensionen mit möglichst hohem Gehalt an Aluminiumsulfat bei möglichst geringer Viskosität ermöglichen. Insbesondere wird eine geringe Viskosität direkt nach der Zugabe einer löslichen Alkalimetallverbindung zur Aluminiumsulfatsuspension erreicht und bevorzugterweise bleibt eine geringe Viskosität auch zu späteren Zeiten nach der Zugabe einer löslichen Alkalimetallverbindung zur Aluminiumsulfatsuspension erhalten. Dies im Besonderen, ohne dabei das Verhältnis von Aluminium zu Sulfat zu beeinflussen und bevorzugt ohne die Wirksamkeit von anderen Komponenten der Aluminiumsulfatsuspension zu beeinträchtigen. Die Aluminiumsulfatsuspensionen sollen sich im Besonderen als möglichst effektive Erstarrungs- und/oder Erhärtungsbeschleuniger für eine mineralisches Bindemittel enthaltende Zusammensetzung, im Besonderen für Spritzbeton oder Spritzmörtel, eignen, wobei die Aluminiumsulfatsuspension sich insbesondere als Spritzbetonbeschleuniger eignen soll. Die Lösungen sollen des Weiteren möglichst kostengünstig und einfach umsetzbar sein.

Überraschenderweise wurde gefunden, dass die erfindungsgemässe Aufgabe durch die Verwendung gemäss Anspruch 1 gelöst werden kann.

Demnach wird mindestens eine lösliche Alkalimetallverbindung zur Einstellung, insbesondere zur Reduktion, der Viskosität einer Aluminiumsulfatsuspension verwendet, wobei das Alkalimetall aus Natrium, Kalium und/oder Lithium ausgewählt ist.

Wie sich gezeigt hat, kann durch die Verwendung einer löslichen Alkalimetallverbindung die Viskosität einer Aluminiumsulfatsuspension bei gleichbleibendem Gehalt an Aluminiumsulfat signifikant reduziert werden und/oder der Gehalt an Aluminiumsulfat kann bei gleichbleibender Viskosität markant erhöht werden. Somit lassen sich in einfacher Art und Weise relativ kostengünstige Aluminiumsulfatsuspensionen mit hohem Gehalt an Aluminiumsulfat und zugleich relativ geringer Viskosität herstellen, welche sich im Besonderen als Erstarrungs- und Erhärtungsbeschleuniger für Spritzbeton und Spritzmörtel eignen.

Die Verwendung der mindestens einen löslichen Alkalimetallverbindung ist dabei im Besonderen im Zeitraum von 1 - 48 h, bevorzugt 1 - 24 h oder 1 - 12 h, insbesondere 2 - 6 h, nach der Zugabe zu der Aluminiumsulfatsuspension bzw. nach der Mischung aller Komponenten zur Herstellung der Aluminiumsulfatsuspension wirksam im Hinblick auf eine Reduzierung der Viskosität der Aluminiumsulfatsuspension. Ein besonderer Vorteil ist, dass Viskositätsspitzen, wie sie in den ersten Stunden nach der Herstellung von Aluminiumsulfatsuspensionen auftreten können, abgemildert werden, was für die wirtschaftliche Herstellung ein Vorteil ist.

Weiter hat sich gezeigt, dass die lösliche Alkalimetallverbindung auch zu späteren Zeiten, insbesondere 1 - 3 Monate nach der der Zugabe zu der Aluminiumsulfatsuspension, als Mittel zur Einstellung, insbesondere zur Reduktion, und/oder zur Aufrechterhaltung der Viskosität wirksam ist. Dies im Besonderen bei Aluminiumsulfatsuspensionen mit einem Anteil von > 34 Gew.-% Aluminiumsulfat (Al₂(SO₄)₃).

Aufgrund der Verwendung einer löslichen Alkalimetallverbindung kann bei geeigneter Auswahl eine Änderung des Verhältnisses von Aluminium zu Sulfat vermieden werden. Bei Einsatz von Alkalimetallaluminaten kann aber auch der Gehalt an Al in der Suspension erhöht werden, was meistens, aber nicht immer von Vorteil ist.

Die Alkalimetallverbindungen von Na, K und Li können eine bessere Wirksamkeit als Magnesiumverbindungen zeigen. Ferner sind Verbindungen von Na und K im Verhältnis zu anderen Chemikalien preiswert, so dass ein ausgezeichnetes Preis/Leistungsverhältnis erreicht wird. Probleme durch Niederschläge bei hohen Konzentrationen, wie sie z.B. bei Einsatz von Magnesiumverbindungen auftreten können (Ausfällung von Magnesiumsulfat), ergeben sich nicht.

Zudem kann die lösliche Alkalimetallverbindung ohne weiteres mit herkömmlichen und stabilisierend wirkenden Magnesiumsilikaten, insbesondere mit Sepiolith, kombiniert werden, ohne dass die Wirksamkeit der löslichen Alkalimetallverbindung beeinträchtigt würde. So können in einer Aluminiumsulfatsuspension bei Bedarf z.B. ein Magnesiumsilikat, insbesondere Sepiolith, in Kombination mit der löslichen Alkalimetallverbindung verwendet werden, womit besonders stabile Aluminiumsulfatsuspension mit hohem Aktivstoffgehalt und geringer Viskosität erhältlich sind.

Des Weiteren kann bei Bedarf auf möglicherweise problematische und/oder teure Substanzen wie Alkanolamine, Carbonsäuren, Aluminiumhydroxid verzichtet werden. Dies ohne signifikante Einbussen in Bezug auf die Beschleunigungswirkung in Kauf zu nehmen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung die Verwendung mindestens einer löslichen Alkalimetallverbindung zur Einstellung, insbesondere zur Reduktion, der Viskosität einer Aluminiumsulfatsuspension, wobei das Alkalimetall aus Natrium, Kalium und/oder Lithium ausgewählt ist. Es können Mischungen von zwei oder mehr löslichen Alkalimetallverbindungen eingesetzt werden, in der Regel ist aber der Einsatz einer Alkalimetallverbindung schon aus praktischen Gründen bevorzugt.

Eine "Aluminiumsulfatsuspension" ist ein heterogenes Stoffgemisch aus einer Flüssigkeit, insbesondere Wasser, und darin fein verteilten Partikeln aus Aluminiumsulfat. Bevorzugt handelt es sich um eine wässrige Aluminiumsulfatsuspension. Nebst dem Aluminiumsulfat in Partikelform kann ein Teil des Aluminiumsulfats auch in gelöster und/oder in chemisch umgewandelter Form vorliegen, insbesondere in der wässrigen Aluminiumsulfatsuspension. Eine chemisch umgewandelte Form von Aluminiumsulfat ist z.B. Jurbanit (AlOHSO₄ · 5 H₂O). Eine Aluminiumsulfatsuspension ist vorliegend somit keine reine Lösung, sondern es sind stets fein verteilte Partikel aus Aluminiumsulfat in der flüssigen Phase, insbesondere Wasser, vorhanden. Zusätzlich zur Flüssigkeit und dem Aluminiumsulfat kann die Aluminiumsulfatsuspension weitere Komponenten enthalten, welche in gelöster und/oder fester Form vorliegen können.

Besonders bevorzugt ist die Aluminiumsulfatsuspension ein Erstarrungs- und/oder Erhärtungsbeschleuniger für ein mineralisches Bindemittel, insbesondere ein Spritzbetonbeschleuniger. Entsprechend wird die lösliche Alkalimetallverbindung bevorzugt zur Einstellung der Viskosität eines auf einer Aluminiumsulfatsuspension basierenden Erstarrungs- und/oder Erhärtungsbeschleunigers für eine mineralisches Bindemittel, insbesondere Zement, enthaltende Zusammensetzung verwendet, wobei die Aluminiumsulfatsuspension bevorzugt ein Spritzbetonbeschleuniger ist, insbesondere für Spritzbeton oder Spritzmörtel.

Der Ausdruck "Erstarrungs- und/oder Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Beschleuniger, zu einer Erhöhung der Druckfestigkeit des mineralischen Bindemittels nach einem definierten Zeitpunkt nach dem Anmachen führt, insbesondere zu einem Zeitpunkt innerhalb von 2 Minuten - 24 Stunden nach dem Anmachen.

Eine "lösliche Alkalimetallverbindung" ist vorliegend eine Alkalimetallverbindung, welche in destilliertem Wasser, das mit HCl auf einen pH 2 eingestellt ist, bei 25°C und einem Druck von 1 bar mit mindestens 5 g pro 1 Liter löslich ist.

"Einstellung der Viskosität" bedeutet vorliegend insbesondere, dass die Viskosität der Aluminiumsulfatsuspension durch die lösliche Alkalimetallverbindung gezielt kontrolliert und/oder eingestellt wird. Insbesondere wird die Viskosität der Aluminiumsulfatsuspension durch die Anwesenheit der löslichen Alkalimetallverbindung gegenüber einer Aluminiumsulfatsuspension, welche die lösliche Alkalimetallverbindung nicht enthält ansonsten aber identisch zusammengesetzt ist, verändert oder reduziert.

Die Viskosität wird insbesondere nach Norm DIN EN ISO 2431:2011 bestimmt. Bevorzugt mit einem ISO-Becher Nr. 6 oder Nr. 4 und bei einer Temperatur von 23°C.

Gewichts- und Molanteile beziehen sich wo nicht anders angegeben jeweils auf die einsatzbereite Aluminiumsulfatsuspension nach erfolgter Einstellung der Viskosität. Die einsatzbereite Aluminiumsulfatsuspension ist insbesondere zur unmittelbaren Verwendung als Erstarrungs- und/oder Erhärtungsbeschleuniger ausgelegt. Die einsatzbereite Aluminiumsulfatsupension beinhaltet somit nebst dem Aluminiumsulfat und der Flüssigkeit auch die mindestens eine lösliche Alkalimetallverbindung sowie gegebenenfalls vorhandene weitere Komponenten.

Die Aluminiumsulfatsuspension ist bevorzugt chloridfrei. Die Aluminiumsulfatsuspension ist trotz des Einsatzes der Alkalimetallverbindung auch bevorzugt alkalifrei oder alkaliarm.

Unter alkalifrei wird in der Bauchemie üblicherweise eine Zusammensetzung verstanden, welche weniger als 1 Gew.-% Alkali- und/oder Alkalimetallionen berechnet als Natriumoxidäquivalent (Na₂O) aufweist, bezogen auf das Gesamtgewicht der Zusammensetzung bzw. der Aluminiumsulfatsuspension. Unter alkaliarm wird hier eine Zusammensetzung verstanden, welche nicht mehr als 5 Gew.-% Alkali- und/oder Alkalimetallionen berechnet als Natriumoxidäquivalent (Na₂O) aufweist, bezogen auf das Gesamtgewicht der Zusammensetzung bzw. der Aluminiumsulfatsuspension.

Als Na₂O Äquivalent bezeichnet man die Gewichtsmenge, welche sich ergeben würde, wenn sämtliche Alkaliionen (insbesondere Na und K) als Na₂O vorliegen würden.

Chloridfrei bezeichnet in der Bauchemie üblicherweise eine Zusammensetzung, welche weniger als 0.1 Gew.-% Chloridionen aufweist, bezogen auf das Gesamtgewicht der Zusammensetzung bzw. der Aluminiumsulfatsuspension.

Die lösliche Alkalimetallverbindung wird insbesondere zur Einstellung der Viskosität, insbesondere zur Reduktion der Viskosität verwendet.

Insbesondere wird die lösliche Alkalimetallverbindung zur Einstellung der Viskosität, insbesondere zur Reduktion der Viskosität, einer Aluminiumsulfatsuspension verwendet, wobei die Einstellung der Viskosität, insbesondere die Reduktion, bevorzugt im Zeitraum von 1 - 168 h, mehr bevorzugt 1 - 48 h, im Speziellen im Zeitraum von 1 - 24 h, nach Erhalt der mit der löslichen Alkalimetallverbindung versetzten Aluminiumsulfatsuspension abgeschlossen ist. Insbesondere kann die lösliche Alkalimetallverbindung die Viskosität einer Aluminiumsulfatsuspension im Zeitraum von 1 - 6 h nach der Zugabe zu der Aluminiumsulfatsuspension bzw. nach der Mischung aller Komponenten zur Herstellung der Aluminiumsulfatsuspension verringern, was insbesondere für die Herstellung ein Vorteil ist.

Insbesondere bleibt die einmal eingestellte Viskosität über einen längeren Zeitraum, insbesondere über einen Zeitraum von mehreren Monaten, stabil. Im Speziellen wird die lösliche Alkalimetallverbindung daher zur Einstellung der Viskosität, insbesondere zur Reduktion der Viskosität, einer Aluminiumsulfatsuspension über einen Zeitraum von mehreren Monaten, ganz besonders bevorzugt 1 - 3 Monaten, nach Erhalt der mit der löslichen Alkalimetallverbindung versetzten Aluminiumsulfatsuspension verwendet. Dies insbesondere bei Aluminiumsulfatsuspensionen mit einem Anteil von > 34 Gew.-% Aluminiumsulfat (Al₂(SO₄)₃).

Da die lösliche Alkalimetallverbindung eine Einstellung der Viskosität, insbesondere die Reduktion der Viskosität, im Zeitraum von 1 - 168 h, bevorzugt 1 - 48 h, im Speziellen im Zeitraum von 6 - 24 h, nach Erhalt der mit der löslichen Alkalimetallverbindung versetzten Aluminiumsulfatsuspension ermöglicht, kann die Viskosität der Aluminiumsulfatsuspension schon kurz nach der Herstellung auf den gewünschten Wert eingestellt werden. Dies erlaubt wiederum eine kürzere Produktionsdauer, da die Aluminiumsulfatsuspensionen nach der Herstellung innerhalb weniger Stunden bestimmungsgemäss eingesetzt werden können, insbesondere als Erstarrungs- und/oder Erhärtungsbeschleuniger.

Da die lösliche Alkalimetallverbindung zudem eine Einstellung der Viskosität, insbesondere die Reduktion der Viskosität, über einen längeren Zeitraum, insbesondere über einen Zeitraum von mehreren Monaten, nach Erhalt der mit der löslichen Alkalimetallverbindung versetzten Aluminiumsulfatsuspension ermöglicht, kann eine langfristige Viskositätsreduktion erreicht werden. Damit lassen sich die Aluminiumsulfatsuspensionen bei Bedarf während längerer Zeit mit im Wesentlichen konstanter Viskosität lagern.

Die lösliche Alkalimetallverbindung kann demnach eingesetzt werden in einem Verfahren zur Einstellung der Viskosität einer Aluminiumsulfatsuspension.

Ein weiterer Aspekt der vorliegenden Erfindung ist demnach ein Verfahren zur Einstellung der Viskosität, insbesondere der Reduktion der Viskosität, einer Aluminiumsulfatsuspension, vorzugsweise in einem Zeitraum von 1 - 168 h, bevorzugt 1 - 48 h, im Speziellen im Zeitraum von 6 - 24 h, nach Erhalt der mit der löslichen Alkalimetallverbindung versetzten Aluminiumsulfatsuspension und/oder zur Einstellung der Viskosität, insbesondere der Reduktion der Viskosität, über einen längeren Zeitraum, insbesondere über einen Zeitraum von mehreren Monaten, umfassend die Schritte:
a) Vorlegen einer wässrigen Zubereitung von Aluminiumsulfat sowie
b) Einmischen mindestens einer löslichen Alkalimetallverbindung
c) optional einmischen von weiterem Aluminiumsulfat
wobei eine Aluminiumsulfatsuspension erhalten wird.
oder
a) Vorlegen einer wässrigen Zubereitung einer löslichen Alkalimetallverbindung sowie
b) Einmischen von Aluminiumsulfat unter Erhalt einer Aluminiumsulfatsuspension.

Alle Varianten sind möglich. Teilweise ist die abwechselnde Zugabe der jeweiligen Komponenten eine bevorzugte Methode. Eine Zubereitung ist vorliegend eine Lösung oder Suspension. Eine wässrige Zubereitung ist demnach eine Lösung oder Suspension in Wasser.

Die wässrige Zubereitung von Aluminiumsulfat ist eine Lösung oder eine Suspension von Aluminiumsulfat in Wasser. Es ist auch möglich, dass Anteile von Aluminiumsulfat in gelöster Form und Anteile von Aluminiumsulfat in suspendierter Form in der wässrigen Zubereitung vorliegen.

Die erfindungsgemässen Erstarrungs- und/oder Erhärtungsbeschleuniger für hydraulische Bindemittel enthaltende Zusammensetzungen, im Besonderen für Spritzbeton oder Spritzmörtel, sind Aluminiumsulfatsupensionen.

Die lösliche Alkalimetallverbindung kann der Aluminiumsulfatzubereitung direkt während deren Herstellung zugegeben werden. Es ist aber auch möglich, die lösliche Alkalimetallverbindung der Aluminiumsulfatzubereitung kurz nach deren Herstellung, beispielsweise innerhalb 1h nach deren Herstellung, zuzugeben. Schliesslich ist es auch möglich, die lösliche Alkalimetallverbindung der Aluminiumsulfatzubereitung erst nach längerer Zeit nach deren Herstellung zuzugeben, beispielsweise nach 5 Tagen oder länger.

Die lösliche Alkalimetallverbindung ist bevorzugt eine basische Alkalimetallverbindung. Dies meint, dass die lösliche Alkalimetallverbindung den pH-Wert von destilliertem Wasser, das mit HCl auf einen pH = 2 eingestellt ist, bei 25°C und einem Druck von 1 bar anzuheben vermag, wenn diese dem sauer eingestellten Wasser zugegeben wird.

Die lösliche Alkalimetallverbindung beinhaltet bevorzugt ein Alkalimetallsalz und/oder einen Alkalimetallkomplex.

Die erfindungsgemäss verwendeten löslichen Alkalimetallverbindungen erlauben es, hocheffektive Erstarrungs- und/oder Erhärtungsbeschleuniger zu formulieren, welche im Wesentlichen frei von Calcium sind. Da Calcium unter Umständen die Reaktion oder Auflösung von Zementklinker verlangsamt, kann ein Erstarrungs- und/oder Erhärtungsbeschleuniger im Wesentlichen ohne Calcium vorteilhaft sein.

Das Alkalimetall der Alkalimetallverbindung ist ausgewählt aus Natrium, Kalium und/oder Lithium, wobei Natrium und/oder Kalium bevorzugt ist.

Im Besonderen handelt es sich bei der löslichen Alkalimetallverbindung um ein Aluminat, Oxid, Hydroxid, Carbonat, Hydrogencarbonat, Nitrat, Sulfat, Phosphat, Halogenid, Formiat, Acetat, Citrat, Thiocyanat, Silikat oder Mischungen daraus.

Weiter bevorzugt handelt es sich bei der löslichen Alkalimetallverbindung um ein Aluminat, Oxid, Hydroxid, Carbonat, Hydrogencarbonat, Nitrat, Formiat, Acetat, Citrat oder Mischungen daraus.

Bevorzugt ist die lösliche Alkalimetallverbindung ein Natriumaluminat, Natriumcarbonat, Natriumbicarbonat, Natriumoxid, Natriumhydroxid, Kaliumaluminat, Kaliumcarbonat, Kaliumbicarbonat, Kaliumoxid, Kaliumhydroxid, Lithiumaluminat, Lithiumcarbonat, Lithiumbicarbonat, Lithiumoxid, Lithiumhydroxid oder eine Mischung davon, wobei die Verbindungen mit Natrium oder Kalium bevorzugt sind. Ganz besonders bevorzugt ist die Alkalimetallverbindung ausgewählt aus Natriumaluminat, Natriumcarbonat, Natriumbicarbonat, Natriumoxid, Natriumhydroxid, Kaliumaluminat oder einer Mischung davon.

Diese Alkalimetallverbindungen haben sich im vorliegenden Zusammenhang als besonders vorteilhaft erwiesen, da damit eine signifikante Reduktion der Viskosität erreicht werden kann ohne weitere Komponenten negativ zu beeinflussen. Zudem sind die Substanzen gut erhältlich.

Grundsätzlich können aber auch andere lösliche Alkalimetallverbindungen eingesetzt werden.

Die mindestens eine lösliche Alkalimetallverbindung, insbesondere die vorstehend genannten löslichen Alkalimetallverbindungen, kann z.B. in Form eines Pulvers oder als wässrige Lösung zur Aluminiumsulfatsuspension oder während der Herstellung der Aluminiumsulfatsuspension zugegeben werden. Natriumaluminat kann z.B. als Pulver oder als wässrige Lösung zugesetzt werden.

Die Menge der löslichen Alkalimetallverbindung wird bevorzugt derart gewählt, dass die Alkalimetallatome, bezogen auf das Gesamtgewicht der Aluminiumsulfatsuspension, einen Anteil von 0.02 - 5 Gew.-%, insbesondere 0.05 - 2 Gew.-%, besonders bevorzugt 0.1 - 1.4 Gew.-%, im Speziellen 0.2 - 0.7 Gew.-%, aufweisen.

Mit diesen Mengen wird eine besonders gute Reduktion der Viskosität ermöglicht, ohne dass die erstarrungs- und/oder erhärtungsbeschleunigenden Eigenschaften der Aluminiumsulfatsuspension nennenswert negativ beeinflusst werden.

Bevorzugt weist die Aluminiumsulfatsuspension, bezogen auf das Gesamtgewicht der Aluminiumsulfatsuspension, einen Anteil an Sulfat (SO₄⁻) von 19 - 40 Gew.-%, insbesondere 24 - 36 Gew.-%, im Speziellen 28 - 34 Gew.-%, auf.

Weiter ist es bevorzugt, wenn die Aluminiumsulfatsuspension, bezogen auf das Gesamtgewicht der Aluminiumsulfatsuspension, einen Anteil an Aluminium (Al) von 3.5 - 10 Gew.-%, insbesondere 4.5 - 8.7 Gew.-%, im Besonderen 5.4 - 7 Gew.-%, aufweist.

Mit derartigen Anteilen an Aluminium und Sulfat können Aluminiumsulfatsuspensionen mit einem hohen Wirkstoffanteil hergestellt werden, welche sich durch eine besonders gute Erstarrungs- und/oder Erhärtungsbeschleunigung auszeichnen.

Die Aluminiumsulfatsuspension enthält mit Vorteil Aluminiumsulfat, Aluminiumhydroxysulfat, Schwefelsäure, Aluminiumhydroxid, und/oder Aluminiumhydroxidcarbonat. Besonders bevorzugt ist Aluminiumsulfat.

Das Sulfat der Aluminiumsulfatsuspension stammt insbesondere aus Aluminiumsulfat, Aluminiumhydroxysulfat und/oder Schwefelsäure. Besonders bevorzugt ist Aluminiumsulfat. Mit anderen Worten enthält der Beschleuniger insbesondere wenigstens eine der genannten Substanzen als Quelle für Sulfat.

Das Aluminium des Beschleunigers stammt vorteilhafterweise aus Aluminiumsulfat, Aluminiumhydroxysulfat, Aluminiumhydroxid, und/oder Aluminiumhydroxidcarbonat. Besonders bevorzugt ist Aluminiumsulfat. Anders ausgedrückt enthält der Beschleuniger insbesondere wenigstens eine der genannten Substanzen als Quelle für Aluminium.

In einer vorteilhaften Ausführungsform enthält die Aluminiumsulfatsuspension, bezogen auf das Gesamtgewicht der Aluminiumsulfatsuspension, 22 - 46 Gew.-%, insbesondere 28 - 43 Gew.-%, bevorzugt 34 - 41 Gew.-%, Aluminiumsulfat (Al₂(SO₄)₃).

Das zur Herstellung verwendbare Aluminiumsulfat kann insbesondere unterschiedliche Mengen an Kristallwasser enthalten. Das typischerweise verwendete Aluminiumsulfat ist das Aluminiumsulfat-Tetradecahydrat (Al₂(SO₄)₃ · ca. 14 H₂O). Es wird üblicherweise auch als 17% Aluminiumsulfat bezeichnet, weil es ca. 17% Al₂O₃ enthält.

Die in dieser vorliegenden Schrift erwähnten Mengenangaben betreffend Aluminiumsulfat beziehen sich jeweils auf Al₂(SO₄)₃ ohne Kristallwasser, sofern nicht anders angegeben. Die Mengenabgaben bezüglich der unterschiedlichen Referenzverbindungen lassen sich unter Berücksichtigung der folgenden Zusammenhänge einfach umrechnen: Al₂(SO₄)₃ · ca. 14 H₂O enthält 57 Gew.-% Al₂(SO₄)₃ oder 17 Gew.-% Al₂O₃.

Das Aluminiumsulfat kann auch durch eine Reaktion von Aluminiumhydroxid und/oder Aluminiummetall mit Schwefelsäure bei der Herstellung der Aluminiumsulfatsuspension erzeugt werden, wobei sich entsprechend Sulfationen in der wässrigen Lösung bilden. Allgemein kann Aluminiumsulfat durch eine Reaktion einer basischen Aluminiumverbindung und/oder Aluminiummetall mit Schwefelsäure erzeugt werden.

Gemäss einer weiteren vorteilhaften Ausführungsform enthält die Aluminiumsulfatsuspension, bezogen auf das Gesamtgewicht der Aluminiumsulfatsuspension, 0.01 - 15 Gew.-%, insbesondere 0.05 - 5 Gew.-%, besonders bevorzugt 0.1 - 2 Gew.-%, Aluminiumhydroxid.

Damit lässt sich z.B. der Aluminiumgehalt unabhängig vom Sulfatgehalt der Aluminiumsulfatsuspension in effektiver Weise erhöhen.

Das Aluminiumhydroxid kann in amorpher und/oder kristalliner Form eingesetzt werden. Vorteilhafterweise wird amorphes Aluminiumhydroxid verwendet. Dies insbesondere da kristallines Aluminiumhydroxid typischerweise erst bei Temperaturen > 130°C und einem Druck > 1 bar ausreichend reagiert. Das Alumiumhydroxid kann auch in Form von Aluminiumhydroxidcarbonat, Aluminiumhydroxysulfat oder ähnlichem verwendet werden.

In einer vorteilhaften Ausführungsform liegt das Molverhältnis von Aluminium zu Sulfat der Aluminiumsulfatsuspension bei kleiner oder gleich 0.9, bevorzugt kleiner oder gleich 0.85, mehr bevorzugt kleiner oder gleich 0.8, noch mehr bevorzugt kleiner oder gleich 0.74, ganz besonders bevorzugt kleiner oder gleich 0.7, insbesondere bei 2:3. In diesem Fall kann die Aluminiumsulfatsuspension in besonders einfacher Art und Weise durch das Suspendieren von Aluminiumsulfat (Al₂(SO₄)₃) hergestellt werden. Bei der erfindungsgemässen Verwendung der löslichen Alkalimetallverbindung lassen sich so Aluminiumsulfatsuspensionen mit hohen Wirkstoffgehalten und geringen Viskositäten herstellen.

In einer weiteren vorteilhaften Ausführungsform liegt das Molverhältnis von Aluminium zu Sulfat der Aluminiumsulfatsuspension im Bereich von 0.5 - 2, bevorzugt 0.67 - 1.35, im Besonderen 0.7 - 1.0. Solche Aluminiumsulfatsuspensionen weisen für gewisse Anwendungen eine verbesserte Wirksamkeit auf.

Bevorzugt weist die Aluminiumsulfatsuspension, bezogen auf das Gesamtgewicht der Aluminiumsulfatsuspension, einen Anteil an Wasser von 30 - 80 Gew.-%, insbesondere 40 - 70 Gew.-%, bevorzugt 50 - 65 Gew.-% auf. Kristallwasser der Komponenten der Aluminiumsulfatsuspension, z.B. Kristallwasser aus Aluminiumsulfat, wird hier mitgerechnet.

Gemäss einer weiteren vorteilhaften Ausführungsform wird die lösliche Alkalimetallverbindung zur Reduktion der Viskosität in Kombination mit einer Magnesiumverbindung, einer Calciumverbindung und/oder einer Eisenverbindung eingesetzt. Besonders wird sowohl eine Calciumverbindung als auch eine Eisenverbindung verwendet. Ohne an die Theorie gebunden zu sein, wird davon ausgegangen, dass die Calciumverbindung und die Eisenverbindung die Wirkung der löslichen Alkalimetallverbindung zusätzlich verstärken. Gemäss einer speziell bevorzugten Ausführungsform wird die lösliche Alkalimetallverbindung zur Reduktion der Viskosität der Aluminiumsulfatsuspension in Kombination mit einer Magnesiumverbindung eingesetzt.

Die Magnesiumverbindung, Calciumverbindung und/oder die Eisenverbindung ist im Besonderen ein Oxid, Hydroxid, Carbonat, Nitrat, Sulfat, Phosphat, Halogenid, Formiat, Acetat und/oder Citrat.

Die Magnesiumverbindung, Calciumverbindung und/oder die Eisenverbindung ist bevorzugt ein Oxid, Hydroxid, Carbonat, Nitrat, Formiat, Acetat und/oder Citrat.

Besonders bevorzugt ist die Calciumverbindung ein Calciumcarbonat, ein Calciumoxid und/oder ein Calciumhydroxid. Besonders bevorzugt ist Calciumoxid. Besonders bevorzugt ist die Magnesiumverbindung ein Magnesiumcarbonat, ein Magnesiumoxid und/oder ein Magnesiumhydroxid.

Im Speziellen handelt es sich bei der Calciumverbindung um Ca(OH)₂, CaCO₃ und/oder CaO. Besonders bevorzugt ist CaO. Im Speziellen handelt es sich bei der Magnesiumverbindung um Mg(OH)₂, MgCOs und/oder MgO. Besonders bevorzugt ist MgO.

Eine Menge der Calciumverbindung oder Magnesiumverbindung wird im Besonderen derart gewählt, dass die Calciumatome bzw. Magnesiumatome, bezogen auf das Gesamtgewicht der Aluminiumsulfatsuspension, einen Anteil von 0.001 - 4 Gew.-%, bevorzugt 0.01 - 2 Gew.-%, insbesondere 0.07 - 1.4 Gew.-%, im Speziellen 0.1 - 0.7 Gew.-%, aufweisen.

Wird als Calciumverbindung CaO eingesetzt, beträgt ein Anteil an CaO, bezogen auf das Gesamtgewicht der Aluminiumsulfatsuspension, mit Vorteil 0.001 - 5 Gew.-%, bevorzugt 0.01 - 3 Gew.-%, insbesondere 0.1 - 2 Gew.-%, im Speziellen 0.2 - 1 Gew.-%. Wird als Magnesiumverbindung MgO eingesetzt, beträgt ein Anteil an MgO, bezogen auf das Gesamtgewicht der Aluminiumsulfatsuspension, mit Vorteil 0.001 - 5 Gew.-%, bevorzugt 0.01 - 3 Gew.-%, insbesondere 0.1 - 2 Gew.-%, im Speziellen 0.2 - 1 Gew.-%.

Besonders bevorzugt ist die Eisenverbindung ein Eisenoxid. Im Speziellen handelt es sich bei der Eisenverbindung um Fe₂O₃.

Eine Menge der Eisenverbindung wird im Besonderen derart gewählt, dass die Eisenatome, bezogen auf das Gesamtgewicht der Aluminiumsulfatsuspension, einen Anteil von 0.001 - 10 Gew.-%, insbesondere 0.1 - 5 Gew.-%, im Speziellen 0.2 - 2 Gew.-%, ganz besonders bevorzugt 0.1 - 0.6 Gew.-%, aufweisen.

Wird als Eisenverbindung Fe₂O₃ eingesetzt, beträgt ein Anteil an Fe₂O₃, bezogen auf das Gesamtgewicht der Aluminiumsulfatsuspension, mit Vorteil 0.001 - 14.3 Gew.- %, insbesondere 0.1 - 7.1 Gew.-%, im Speziellen 0.2 - 2 Gew.-%.

Gemäss einer weiteren vorteilhaften Ausführungsform enthält die Aluminiumsulfatsuspension Kieselsäure.

Unter dem Begriff "Kieselsäure" wird in der vorliegenden Schrift eine Kieselsäure verstanden, zu der neben der ortho-Kieselsäure alle Formen des Siliciumdioxids, also das Anhydrid der ortho-Kieselsäure, das eigentliche Siliciumdioxid, wie auch kolloidale, gefällte oder pyrogene Kieselsäure oder Silicafume, gezählt werden. Bevorzugt handelt es sich bei der Kieselsäure um Siliziumdioxid oder SiO₂.

Die Kieselsäure liegt bevorzugt in einer derartigen Menge vor, dass der Gehalt an Siliziumdioxid, bezogen auf das Gesamtgewicht der Aluminiumsulfatsuspension, 0.001 bis 5 Gew.-%, bevorzugt 0.1 bis 2 Gew.-%, noch mehr bevorzugt 0.2 bis 1 Gew.-% beträgt.

Zusätzlich kann zur Herstellung der Aluminiumsulfatsuspension mindestens ein weiteres zwei- oder höherwertiges Metallsalz, insbesondere Metallsulfat verwendet werden, vorzugsweise in einer Menge von 0.1 - 5 Gew.-%, bezogen auf das Gesamtgewicht der Aluminiumsulfatsuspension. Besonders bevorzugt als weiteres Metallsulfat ist das Mangan(II)sulfat. Ebenfalls geeignet ist das Eisensulfat.

Weiter kann es vorteilhaft sein, wenn die Aluminiumsulfatsuspension zudem 0.1 - 15 Gew.-%, bevorzugt 0.1 - 5 Gew.-%, im Speziellen 0.2 - 2 Gew.-%, bezogen auf das Gesamtgewicht der Aluminiumsulfatsuspension, an Alkanolamin enthält. Als Alkanolamin wird vorteilhafterweise Monoethanolamin, Diethanolamin, Triethanolamin und/oder Methyl-diisopropanolamin verwendet.

Die Aluminiumsulfatsuspension kann zusätzlich Stabilisatoren, z.B. Bentonite, Palygorskite (z.B. Actigel 208), Kaolin und/oder Magnesiumsilikate, z.B. Sepiolith, enthalten. Es ist bevorzugt, dass erfindungsgemässe Aluminiumsulfatsuspensionen frei sind von organischen Fliessmitteln, insbesondere von Polycarboxylaten, Polycarboxylatestern und/oder Polycarboxylatethern.

Die Aluminiumsulfatsuspension kann insbesondere ein Magnesiumsilikat, insbesondere ein Schichtsilikat und/oder Phyllosilikat, beispielsweise Sepiolith und/oder Bentonit enthalten. Falls vorhanden beträgt ein Anteil an Magnesiumsilikat mit Vorteil 0.001 - 5 Gew.-%, bevorzugt 0.1 - 2 Gew.-%, im Speziellen 0.2 - 1 Gew.- %, bezogen auf das Gesamtgewicht der Aluminiumsulfatsuspension. Magnesiumsilikate sind im vorliegenden Zusammenhang inert bzw. gemäss der vorstehenden Löslichkeitsdefinition unlöslich und tragen zur Phasenstabilisierung bei.

Weiter kann die lösliche Alkalimetallverbindung in Kombination mit einem Magnesiumsilikat zur Einstellung, insbesondere zur Reduktion, der Viskosität und zur gleichzeitigen Stabilisierung der Aluminiumsulfatsuspension verwendet werden. Das Magnesiumsilikat ist insbesondere ein Schichtsilikat und/oder Phyllosilikat, beispielsweise Sepiolith und/oder Bentonit. Besonders bevorzugt handelt es sich um Sepiolith. Das Magnesiumsilikat, insbesondere Sepiolith, wird dabei bevorzugt mit einem Anteil von 0.001 - 5 Gew.-%, bevorzugt 0.1 - 2 Gew.-%, im Speziellen 0.2 - 1 Gew.-%, bezogen auf das Gesamtgewicht der Aluminiumsulfatsuspension verwendet. Die Menge der löslichen Alkalimetallverbindung wird bevorzugt derart gewählt, dass die Alkalimetallatome, bezogen auf das Gesamtgewicht der Aluminiumsulfatsuspension, einen Anteil von 0.02 - 5 Gew.-%, insbesondere 0.05 - 2 Gew.-%, besonders bevorzugt 0.1 - 1.4 Gew.-%, im Speziellen 0.2 - 0.7 Gew.-%, aufweisen.

Selbstverständlich kann die Aluminiumsulfatsuspension weitere Bestandteile umfassen. Dabei kann es sich insbesondere um Fluorverbindungen, wie z.B. Flusssäure, Alkalifluoride, und/oder Fluorokomplexe handeln. Diese ermöglichen es beispielsweise, die beschleunigende Wirkung nochmals zu verstärken.

Im Besonderen enthält die Aluminiumsulfatsuspension bezogen auf das Gesamtgewicht der Aluminiumsulfatsuspension 0.01 - 10 Gew.-%, insbesondere 0.05 - 2 Gew.-%, bevorzugt 0.1 - 0.5 Gew.-%, Fluorid. Damit kann die Beschleunigungswirkung der Aluminiumsulfatsuspension gegebenenfalls verstärkt werden.

Die vorgenannten Stoffe sind dabei insbesondere zumindest teilweise als Ionen in Lösung anzutreffen. Sie können aber beispielsweise auch in komplexierter Form oder ungelöst in der Aluminiumsulfatsuspension auftreten.

Eine besonders vorteilhafte Aluminiumsulfatsuspension umfasst beispielsweise folgende Komponenten oder sie besteht daraus (in Gew.-%, jeweils bezogen auf das Gesamtgewicht der Aluminiumsulfatsuspension):
a) 19 bis 40 Gew.-%, insbesondere 24 - 36 Gew.-%, im Speziellen 28 - 34 Gew.-%, Sulfat;
b) 3.5 - 10 Gew.-%, insbesondere 4.5 - 8.7 Gew.-%, im Besonderen 5.4 - 7 Gew.- %, Aluminium;
c) mindestens eine lösliche Alkalimetallverbindung, wobei das Alkalimetall aus Natrium, Kalium und/oder Lithium ausgewählt ist, in einer solchen Menge, dass die Alkalimetallatome, bezogen auf das Gesamtgewicht der Aluminiumsulfatsuspension, einen Anteil von 0.02 - 5 Gew.-%, insbesondere 0.05 - 2 Gew.-%, besonders bevorzugt 0.1 - 1.4 Gew.-%, im Speziellen 0.2 - 0.7 Gew.-%, aufweisen;
d) optional, 0.001 - 4 Gew.-%, bevorzugt 0.01 - 2 Gew.-%, insbesondere 0.07 - 1.4 Gew.-%, im Speziellen 0.1 - 0.7 Gew.-%, Calcium oder Magnesium;
e) optional 0.001 - 10 Gew.-%, insbesondere 0.1 - 5 Gew.-%, im Speziellen 0.2 - 2 Gew.-%, ganz besonders bevorzugt 0.1 - 0.6 Gew.-%, Eisen;
f) optional, 0.001 bis 5 Gew.-%, bevorzugt 0.1 bis 2 Gew.-%, noch mehr bevorzugt 0.2 bis 1 Gew.-%, Siliziumdioxid oder SiO₂;
g) und Wasser, wobei bevorzugt der zu 100 Gew.-% fehlende Teil Wasser ist, besonders bevorzugt 30 - 77.48 Gew.-%, insbesondere 40 - 70 Gew.-%, ganz besonders bevorzugt 50 - 65 Gew.-%, Wasser.

Eine besonders bevorzugte Aluminiumsulfatsuspension enthält beispielsweise (in Gew.-%, jeweils bezogen auf das Gesamtgewicht der Aluminiumsulfatsuspension):
a) 22 - 46 Gew.-%, insbesondere 28 - 43 Gew.-%, bevorzugt 34 - 41 Gew.-%, Aluminiumsulfat (Al₂(SO₄)₃;
b) optional, 0.01 - 15 Gew.-%, insbesondere 0.05 - 5 Gew.-%, besonders bevorzugt 0.1 - 2 Gew.-%, Aluminiumhydroxid (Al(OH)₃);
c) mindestens eine lösliche Alkalimetallverbindung, wobei das Alkalimetall aus Natrium, Kalium und/oder Lithium ausgewählt ist, in einer solchen Menge, dass die Alkalimetallatome, bezogen auf das Gesamtgewicht der Aluminiumsulfatsuspension, einen Anteil von 0.02 - 5 Gew.-%, insbesondere 0.05 - 2 Gew.-%, besonders bevorzugt 0.1 - 1.4 Gew.-%, im Speziellen 0.2 - 0.7 Gew.-%, aufweisen;
d) optional, 0.001 - 5 Gew.-%, insbesondere 0.1 - 2 Gew.-%, im Speziellen 0.2 - 1 Gew.-%, einer Calciumverbindung, ausgewählt aus Calciumoxid und/oder Calciumhydroxid, oder einer Magnesiumverbindung, ausgewählt aus Magnesiumoxid und/oder Magnesiumhydroxid;
e) optional, 0.001 - 10 Gew.-%, insbesondere 0.1 - 5 Gew.-%, im Speziellen 0.2 - 2 Gew.-%, ganz besonders bevorzugt 0.1 - 0.6 Gew.-% Eisen;
f) optional, 0.001 bis 5 Gew.-%, bevorzugt 0.1 bis 2 Gew.-%, noch mehr bevorzugt 0.2 bis 1 Gew.-%, Siliziumdioxid;
g) optional, 0.1 - 15 Gew.-%, bevorzugt 0.1 - 5 Gew.-%, im Speziellen 0.2 - 2 Gew.- %, Alkanolamin;
h) 0.01 - 10 Gew.-%, insbesondere 0.05 - 2 Gew.-%, bevorzugt 0.1 - 0.5 Gew.-%, Fluorid;
i) und Wasser, wobei bevorzugt der zu 100 Gew.-% fehlende Teil Wasser ist.

Dabei werden in einer bevorzugten Ausführungsform jeweils die bevorzugtesten Bereiche und Subtanzen gewählt.

Gemäss einer speziell bevorzugten Ausführungsform enthält die Aluminiumsulfatsuspension folgende Komponenten oder sie besteht daraus (in Gew.-%, jeweils bezogen auf das Gesamtgewicht der Aluminiumsulfatsuspension):
a) 34 - 41 Gew.-%, Aluminiumsulfat (Al₂(SO₄)₃;
b) mindestens eine lösliche Alkalimetallverbindung, wobei das Alkalimetall aus Natrium, Kalium und/oder Lithium ausgewählt ist, in einer solchen Menge, dass die Alkalimetallatome, bezogen auf das Gesamtgewicht der Aluminiumsulfatsuspension, einen Anteil von 0.02 - 5 Gew.-%, insbesondere 0.05 - 2 Gew.-%, besonders bevorzugt 0.1 - 1.4 Gew.-%, im Speziellen 0.2 - 0.7 Gew.-%, aufweisen;
c) 0.2 - 1 Gew.-%, einer Calciumverbindung, ausgewählt aus Calciumoxid und/oder Calciumhydroxid, oder einer Magnesiumverbindung, ausgewählt aus Magnesiumoxid und/oder Magnesiumhydroxid;
d) optional, 0.001 - 14.3 Gew.-%, insbesondere 0.1 - 7.1 Gew.-%, im Speziellen 0.2 - 2 Gew.-%, Eisenoxid;
e) optional, 0.001 bis 5 Gew.-%, bevorzugt 0.1 bis 2 Gew.-%, noch mehr bevorzugt 0.2 bis 1 Gew.-%, Siliziumdioxid;
f) und Wasser, wobei bevorzugt der zu 100 Gew.-% fehlende Teil Wasser ist.

Gemäss einer weiteren speziell bevorzugten Ausführungsform enthält die Aluminiumsulfatsuspension folgende Komponenten oder sie besteht daraus (in Gew.-%, jeweils bezogen auf das Gesamtgewicht der Aluminiumsulfatsuspension):
a) 34 - 41 Gew.-%, Aluminiumsulfat (Al₂(SO₄)₃;
b) mindestens ein Alkalimetallaluminat als mindestens eine lösliche Alkalimetallverbindung, insbesondere Natriumaluminat und/oder Kaliumaluminat, in einer solchen Menge, dass die Alkalimetallatome, bezogen auf das Gesamtgewicht der Aluminiumsulfatsuspension, einen Anteil von 0.02 - 5 Gew.- %, insbesondere 0.05 - 2 Gew.-%, besonders bevorzugt 0.1 - 1.4 Gew.-%, im Speziellen 0.2 - 0.7 Gew.-%, aufweisen;
c) optional, 0.001 - 5 Gew.-%, insbesondere 0.1 - 2 Gew.-%, im Speziellen 0.2 - 1 Gew.-%, einer Calciumverbindung, ausgewählt aus Calciumoxid und/oder Calciumhydroxid, oder einer Magnesiumverbindung, ausgewählt aus Magnesiumoxid und/oder Magnesiumhydroxid;
d) optional, 0.001 - 5 Gew.-%, insbesondere 0.1 - 2 Gew.-%, im Speziellen 0.2 - 1 Gew.-%, Eisenoxid;
e) optional, 0.001 bis 5 Gew.-%, bevorzugt 0.1 bis 2 Gew.-%, noch mehr bevorzugt 0.2 bis 1 Gew.-%, Siliziumdioxid;
f) und Wasser, wobei bevorzugt der zu 100 Gew.-% fehlende Teil Wasser ist.

Ein weiterer Aspekt betrifft ein Verfahren zur Herstellung einer wie vorstehend beschriebenen Aluminiumsulfatsuspension, welche insbesondere als Abbinde- und/oder Erhärtungsbeschleuniger ausgelegt ist. Dabei werden die vorstehend genannten Komponenten oder Substanzen insbesondere zu einer wässrigen Suspension vermischt. Die Zugabe der einzelnen Substanzen kann prinzipiell in beliebiger Reihenfolge geschehen. Die erfindungsgemässen Aluminiumsulfatsuspensionen sind entsprechend erhältlich durch derartige Verfahren.

Die erhältlichen Aluminiumsulfatsuspensionen können als Erstarrungs- und/oder Erhärtungsbeschleuniger zur Beschleunigung des Abbindens und/oder Erhärtens von mineralischen Bindemitteln und/oder mineralischen Bindemittelzusammensetzungen eingesetzt werden. Dabei handelt es sich insbesondere um eine Mörtel- und/oder Betonzusammensetzung, insbesondere um einen Spritzmörtel und/oder einen Spritzbeton.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Eine "mineralische Bindemittelzusammensetzung" ist entsprechend eine Zusammensetzung enthaltend mindestens ein mineralisches Bindemittel. Beispiele für mineralische Bindemittel, deren Erhärten und/oder Abbinden durch die

Aluminiumsulfatsuspensionen beschleunigt werden können, sind Zemente, wie beispielsweise Portlandzement, Mischzemente, Tonerdezemente, Calciumsulphoaluminatzemente, sowie Kalk, hydraulischer Kalk und Gips oder Mischungen aus zwei oder mehreren der genannten mineralischen Bindemittel. Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von > 35 Gew.- %, Insbesondere ist der Zement vom Typ CEM I, II, III, IV oder V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe, wie z.B. Kalksteinmehl, Quarzmehl und/oder Pigmente enthalten.

In einer vorteilhaften Ausführungsform enthält das mineralische Bindemittel 5 - 95 Gew.-%, insbesondere 5 - 65 Gew.-%, im Speziellen 15 - 35 Gew.-%, latenthydraulische und/oder puzzolanische Bindemittel.

Ein Aspekt, welcher nicht beansprucht ist, betrifft ein Verfahren zur Beschleunigung des Erstarrens und/oder Erhärtens von mineralischen Bindemitteln oder mineralischen Bindemittelzusammensetzungen, beispielsweise Mörtel oder Beton, wobei einem mineralischen Bindemittel oder einer mineralischen Bindemittelzusammensetzung eine wie vorstehend beschriebene Aluminiumsulfatsuspension als Erstarrungs- und/oder Erhärtungsbeschleuniger in einer Menge von 0.1 bis 15 Gew.-%, insbesondere von 1 bis 10 Gew.-%, besonders bevorzugt 4 - 8 Gew.-%, bezogen auf das Gewicht des mineralischen Bindemittels, zugegeben wird.

Beispielsweise ist es möglich, die Aluminiumsulfatsuspension einer Beton- oder Mörtelzusammensetzung, insbesondere einem Spritzbeton oder einem Spritzmörtel, zugegeben, wobei die Beton- oder Mörtelzusammensetzung zur Beschichtung eines Substrats eingesetzt wird. Das Substrat ist insbesondere eine Oberfläche eines Tunnels, einer Mine, einer Baugrube, einer Bucht, eines Brunnes und/oder eines Abflusses.

Bevorzugt wird die Aluminiumsulfatsuspension einem Spritzmörtel oder Spritzbeton nach dem Trocken- oder Nass-Spritzverfahren zudosiert, wobei die Aluminiumsulfatsuspension dem trockenen oder mit Wasser angemachten Bindemittel, Spritzmörtel oder Spritzbeton in der Förderleitung, der Vorbenetzungsdüse oder der Spritzdüse, zugegeben wird. Auch eine Zugabe der Aluminiumsulfatsuspension im Betonwerk ist möglich.

Auch möglich ist es, die Aluminiumsulfatsuspension einer Beton- oder Mörtelzusammensetzung, insbesondere einem Spritzbeton oder einem Spritzmörtel, zugegeben, wobei die Beton- oder Mörtelzusammensetzung zur Herstellung von Freiformstrukturen eingesetzt wird.

Weiterhin ist es möglich, die Aluminiumsulfatsuspension einer Beton- oder Mörtelzusammensetzung in einem Verfahren der additiven Fertigung zuzumischen, vorzugsweise mittels eines dynamischen Mischers.

Aus den nachfolgenden Ausführungsbeispielen ergeben sich dem Fachmann weitere Abwandlungen und Vorteile der Erfindung.

### Ausführungsbeispiele

Die folgenden Materialien wurden in den folgenden Beispielen verwendet:

| Name | Beschreibung |
|---|---|
| Al₂(SO₄)₃ · ca. 14 H₂O | Aluminiumsulfat mit 17- 18 % Al₂O₃ als Pulver |
| Wasser | deionisiertes Wasser |
| Na-Aluminat A | wässrige Lösung von Natriumaluminat (enthält 19 Gew.- % Na₂O und 24 Gew.-% Al₂O₃) |
| Na-Aluminat B | Pulver mit mindestens 39 % Na₂O und 53 - 55 % Al₂O₃ |
| NaOH | wässrige Lösung von NaOH (50 Gew.-%) |
| Na₂CO₃ | Na₂CO₃·H₂O als Pulver |
| KOH | KOH als Pulver |
| LiOH | LiOH als Pulver |
| KHCO₃ | KHCO₃ als Pulver |

Bei den folgenden Angaben zum Anteil an Al₂(SO₄)₃ · ca. 14 H₂O ist das Kristallwasser mit einbezogen. Al₂(SO₄)₃ · ca. 14 H₂O enthält 57 Gew.-% Al₂(SO₄)₃. Entsprechend wird bei Na₂CO₃·H₂O das Kristallwasser mit einbezogen.

Bei den eingesetzten NaOH- und Natriumaluminat-Lösungen beziehen sich die Anteile von NaOH und NaAlO₂ in den folgenden Angaben auf das NaOH bzw. Natriumaluminat als solches, ohne das Wasser der Lösung. Letzteres ist unter H₂O eingerechnet.

Die Messung der Viskosität erfolgte gemäss Norm DIN EN ISO 2431:2011 mit einem ISO-Becher Nr. 6 bei einer Temperatur von 23°C oder mit einem ISO-Becher Nr. 4 bei einer Temperatur von 23°C. "n.b." in den nachstehenden Tabellen bedeutet, dass die Viskosität nicht bestimmbar ist. Die in den folgenden Tabellen angeführten Zeitpunkte beziehen sich auf den Zeitpunkt als Startpunkt (t = 0), zu dem alle Komponenten der Mischung zusammengegeben worden sind.

Die Komponenten können allgemein als Pulver oder als wässrige Lösung zur Mischung gegeben werden. Beispielsweise ist als Ausgangsmaterial für das Aluminiumsulfat nicht nur ein Pulver, sondern ebenso eine wässrige AluminiumsulfatSupension geeignet.

Die hergestellten Aluminiumsulfatsupensionen haben sich über mehrere Monate als lagerstabil erwiesen und verfügen über eine für praktische Anwendungen als Spritzbetonbeschleuniger geeignete Viskosität im Bereich von < 2'000 mPa·s.

### Beispiele 1 bis 4

### Herstellung von Aluminiumsulfatsuspensionen mit Natriumaluminat

Es wurde eine vorgegebene Menge an Wasser in einem Becherglas vorgelegt. Unter Rühren (mechanischer Propellerrührer mit 650 Umdrehungen) wurde sodann das Al₂(SO₄)₃ · ca. 14 H₂O und Natriumaluminat (0 bis 4 Gew.-%) in der in Tabelle 1 angegebenen Reihenfolge und mit den Anteilen gemäss Tabelle 1 portionsweise zugegeben und die Suspension bei Raumtemperatur für 6 h gerührt.

**Tabelle 1: Hergestellte Aluminiumsulfatsupensionen**

| **Reihenfolge** | **Beispiel** → | 1* | 2 | 3 | 4 |
|---|---|---|---|---|---|
| | **Substanz ↓** | | | | |
| **1** | **H₂O** [Gew.-%] | 40 | 39 | 38 | 36 |
| **2** | **Na-Aluminat A** [Gew.-%] | - | 1 | 2 | 4 |
| **3** | **Al₂(SO₄)₃ - ca. 14 H₂O** [Gew.-%] | 60 | 60 | 60 | 60 |

| | | | | | |
|---|---|---|---|---|---|
| *Vergleichsbeispiel | | | | | |

Die Viskosität wurden nach bestimmten Zeitpunkten gemessen. Tabelle 2 gibt eine Übersicht über die Resultate.

**Tabelle 2: Abhängigkeit der Viskosität vom Anteil Natriumaluminat**

| Beispiel | **1*** | **2** | **3** | **4** |
|---|---|---|---|---|
| Anteil Na-Aluminat A [Gew.-%] | 0 | 1 | 2 | 4 |

| | Viskosität [mPa·s] | | | |
|---|---|---|---|---|
| nach 1 h | 669 | 385 | 200 | n.b. |
| nach 2 h | 404 | 303 | 183 | 132 |
| nach 3 h | 323 | 228 | 189 | 113 |
| nach 4 h | 260 | 212 | 183 | 119 |
| nach 5 h | 233 | 184 | 189 | 125 |
| nach 6 h | 194 | 172 | 155 | 119 |
| nach 24 h | 136 | 155 | 137 | 113 |
| nach 48 h | 57 | 79 | 79 | 72 |
| nach 16 Tagen | 87 | 89 | 85 | 91 |

| | | | | |
|---|---|---|---|---|
| *Vergleichsbeispiel | | | | |

Wie aus Tabelle 2 ersichtlich ist, kann die Viskosität der Aluminiumsulfatsuspension durch die Zugabe von Natriumaluminat bei hohem Gehalt an Aluminiumsulfat in den ersten Stunden signifikant reduziert werden.

### Beispiele 5 bis 8

### Herstellung von Aluminiumsulfatsuspensionen mit Natriumaluminat

Die Versuche wurden entsprechend den Beispielen 1 bis 4 durchgeführt, außer dass die Reihenfolge der Zugabe geändert wurde, wie in Tabelle 3 gezeigt.

**Tabelle 3: Hergestellte Aluminiumsulfatsupensionen**

| **Reihenfolge** | **Beispiel** → | 5* | 6 | 7 | 8 |
|---|---|---|---|---|---|
| | **Substanz ↓** | | | | |
| **1** | **H₂O** [Gew.-%] | 40 | 39 | 38 | 36 |
| **2** | **Al₂(SO₄)₃ - ca. 14 H₂O** [Gew.-%] | 20 | 20 | 20 | 20 |
| **3** | **Na-Aluminat A** [Gew.-%] | - | 1 | 2 | 4 |
| **4** | **Al₂(SO₄)₃ · ca. 14 H₂O** [Gew.-%] | 40 | 40 | 40 | 40 |

| | | | | | |
|---|---|---|---|---|---|
| *Vergleichsbeispiel | | | | | |

Die Viskosität wurden nach bestimmten Zeitpunkten gemessen. Tabelle 4 gibt eine Übersicht über die Resultate.

**Tabelle 4: Abhängigkeit der Viskosität vom Anteil Natriumaluminat**

| Beispiel | **5*** | **6** | **7** | **8** |
|---|---|---|---|---|
| Anteil Na-Aluminat A [Gew.-%] | 0 | 1 | 2 | 4 |

| | Viskosität [mPa·s] | | | |
|---|---|---|---|---|
| nach 1 h | 846 | 407 | 207 | 58 |
| nach 2 h | 495 | 314 | 218 | 120 |
| nach 3 h | 338 | 240 | 184 | 151 |
| nach 4 h | 260 | 201 | 161 | 180 |
| nach 5 h | 233 | 179 | 150 | 138 |
| nach 6 h | 189 | 161 | 131 | 87 |
| nach 24 h | 132 | 139 | 117 | 89 |
| nach 48 h | 80 | 93 | 83 | 57 |

| | | | | |
|---|---|---|---|---|
| *Vergleichsbeispiel | | | | |

Wie aus Tabelle 4 ersichtlich ist, kann die Viskosität der Aluminiumsulfatsuspension durch die Zugabe von Natriumaluminat bei hohem Gehalt an Aluminiumsulfat in den ersten Stunden signifikant reduziert werden.

### Beispiele 9 bis 14

### Herstellung von Aluminiumsulfatsuspensionen mit Natriumaluminat

Die Versuche wurden entsprechend den Beispielen 1 bis 4 durchgeführt, außer dass die Menge an Natriumaluminat und die Reihenfolge der Zugabe geändert wurde, wie in Tabelle 5 gezeigt.

**Tabelle 5: Hergestellte Aluminiumsulfatsupensionen**

| **Reihenfolge** | **Beispiel →** | **9** | **10** | **11** | **12** | **13** | **14** |
|---|---|---|---|---|---|---|---|
| | **Substanz ↓** | | | | | | |
| **1** | **H₂O** [Gew.-%] | 32 | 32 | 32 | 32 | 32 | 32 |
| **2** | **Al₂(SO₄)₃ · ca. 14 H₂O** [Gew.-%] | - | 10 | 20 | 30 | 40 | 50 |
| **3** | **Na-Aluminat A** [Gew.-%] | 8 | 8 | 8 | 8 | 8 | 8 |
| **4** | **Al₂(SO₄)₃ · ca. 14 H₂O** [Gew.-%] | 60 | 50 | 40 | 30 | 20 | 10 |

Die Viskosität wurde nach bestimmten Zeitpunkten gemessen. Tabelle 6 gibt eine Übersicht über die Resultate.

**Tabelle 6: Abhängigkeit der Viskosität von Aufteilung Al-sulfat**

| Beispiel | **9** | **10** | **11** | **12** | **13** | **14** |
|---|---|---|---|---|---|---|
| Anteil Na-Aluminat A [Gew.-%] | 8 | 8 | 8 | 8 | 8 | 8 |

| | Viskosität [mPa·s] | | | | | |
|---|---|---|---|---|---|---|
| nach 2 h | 983 | 502 | 972 | 980 | 976 | 818 |
| nach 3 h | 983 | 512 | 908 | 795 | 812 | 722 |
| nach 4 h | 510 | 369 | 509 | 488 | 430 | 510 |
| nach 5 h | 417 | 316 | 382 | 370 | 321 | 381 |
| nach 6 h | 318 | 236 | 294 | 296 | 268 | 281 |
| nach 24 h | 142 | 124 | 142 | 124 | 134 | 136 |
| nach 48 h | 98 | 89 | 95 | 90 | 89 | 93 |

### Beispiele 15 bis 19

### Herstellung von Aluminiumsulfatsuspensionen mit Natriumaluminat

Die Versuche wurden entsprechend den Beispielen 1 bis 4 durchgeführt, außer dass ein anderes Natriumaluminat (Na-Aluminat B) verwendet und die Reihenfolge der Zugabe geändert wurde, wie in Tabelle 7 gezeigt.

**Tabelle 7: Hergestellte Aluminiumsulfatsupensionen**

| **Reihenfolge** | **Beispiel →** | **15*** | **16** | **17** | **18** | **19** |
|---|---|---|---|---|---|---|
| | **Substanz ↓** | | | | | |
| **1** | **H₂O** [Gew.-%] | 40 | 39.5 | 39 | 38 | 37 |
| **2** | **Al₂(SO₄)₃ · ca. 14 H₂O** [Gew.-%] | 20 | 20 | 20 | 20 | 20 |
| **3** | **Na-Aluminat B** [Gew.-%] | - | 0.5 | 1 | 2 | 3 |
| **4** | **Al₂(SO₄)₃ · ca. 14 H₂O** [Gew.-%] | 40 | 40 | 40 | 40 | 40 |

| | | | | | | |
|---|---|---|---|---|---|---|
| * Vergleichsbeispiel | | | | | | |

Die Viskosität wurden nach bestimmten Zeitpunkten gemessen. Tabelle 8 gibt eine Übersicht über die Resultate.

**Tabelle 8: Abhängigkeit der Viskosität von Natriumaluminat**

| Beispiel | **15*** | **16** | **17** | **18** | **19** |
|---|---|---|---|---|---|
| Anteil Na-Aluminat B [Gew.-%] | 0 | 0.5 | 1 | 2 | 3 |

| | Viskosität [mPa·s] | | | | |
|---|---|---|---|---|---|
| nach 1 h | 686 | 371 | 250 | 93 | 43** |
| nach 2 h | 438 | 324 | 283 | 185 | 139 |
| nach 3 h | 357 | 277 | 256 | 219 | 151 |
| nach 4 h | 264 | 212 | 196 | 213 | 139 |
| nach 5 h | 243 | 212 | 190 | 208 | 133 |
| nach 6 h | 216 | 195 | 190 | 173 | 107 |
| nach 24 h | 127 | 133 | 127 | 89 | 87 |
| nach 48 h | 87 | 125 | 97 | 78 | 103 |

| | | | | | |
|---|---|---|---|---|---|
| * Vergleichsbeispiel, ** Wert ungenau / gemessene Zeit für ISO Nr. 6 zu kurz | | | | | |

Wie aus Tabelle 8 ersichtlich ist, kann die Viskosität der Aluminiumsulfatsuspension durch die Zugabe von Natriumaluminat bei hohem Gehalt an Aluminiumsulfat in den ersten Stunden signifikant reduziert werden.

### Beispiele 20 bis 25

### Herstellung von Aluminiumsulfatsuspensionen mit Natriumaluminat

Die Versuche wurden entsprechend den Beispielen 1 bis 4 durchgeführt, außer dass ein anderes Natriumaluminat (Na-Aluminat B) verwendet wurde, wie in Tabelle 9 gezeigt.

**Tabelle 9: Hergestellte Aluminiumsulfatsupensionen**

| **Reihenfolge** | **Beispiel →** | **20*** | **21** | **22** | **23** | **24** | **25** |
|---|---|---|---|---|---|---|---|
| | **Substanz ↓** | | | | | | |
| **1** | **H₂O** [Gew.-%] | 40 | 39.5 | 39 | 38 | 37 | 36 |
| **2** | **Al₂(SO₄)₃ · ca. 14 H₂O** [Gew.-%] | 60 | 60 | 60 | 60 | 60 | 60 |
| **3** | **Na-Aluminat B** [Gew.-%] | - | 0.5 | 1 | 2 | 3 | 4 |

| | | | | | | | |
|---|---|---|---|---|---|---|---|
| * Vergleichsbeispiel | | | | | | | |

Die Viskosität wurde nach bestimmten Zeitpunkten gemessen. Tabelle 10 gibt eine Übersicht über die Resultate.

**Tabelle 10: Abhängigkeit der Viskosität von Menge Natriumaluminat**

| Beispiel | **20*** | **21** | **22** | **23** | **24** | **25** |
|---|---|---|---|---|---|---|
| Anteil Na-Aluminat A [Gew.-%] | 0 | 0.5 | 1 | 2 | 3 | 4 |

| | Viskosität [mPa·s] | | | | | |
|---|---|---|---|---|---|---|
| nach 1 h | 513 | 249 | n.b. | n.b. | n.b. | n.b. |
| nach 2 h | 352 | 200 | 234 | n.b. | n.b. | n.b. |
| nach 3 h | 226 | 178 | 195 | 162 | 126 | 81 |
| nach 4 h | 199 | 155 | 178 | 162 | 113 | 81 |
| nach 5 h | 165 | 149 | 155 | 150 | 80 | 94 |
| nach 6 h | 136 | 143 | 155 | 132 | 34* | 94 |
| nach 24 h | 102 | 115 | 126 | 74 | 52 | 98 |
| nach 48 h | 70 | 110 | 84 | 63 | 60 | 105 |

| | | | | | | |
|---|---|---|---|---|---|---|
| ** Wert ungenau | | | | | | |

Wie aus Tabelle 10 ersichtlich ist, kann die Viskosität der Aluminiumsulfatsuspension durch die Zugabe von Natriumaluminat bei hohem Gehalt an Aluminiumsulfat in den ersten Stunden signifikant reduziert werden.

### Beispiele 26 bis 31

### Herstellung von Aluminiumsulfatsuspensionen mit Natriumaluminat

Die Versuche wurden entsprechend den Beispielen 1 bis 4 durchgeführt, außer dass ein anderes Natriumaluminat (Na-Aluminat B) verwendet und die Reihenfolge der Zugabe geändert wurde, wie in Tabelle 11 gezeigt. Außerdem wurde eine größere Konzentration Aluminiumsulfat verwendet, wobei statt des Propellerrührers eine Dissolverscheibe zum Rühren eingesetzt wurde. Bei allen Versuchen war ein Wasserverlust festzustellen, der nicht korrigiert wurde.

**Tabelle 11: Hergestellte Aluminiumsulfatsupensionen**

| **Reihenfolge** | **Beispiel →** | **26*** | **27** | **28** | **29** | **30** | **31** |
|---|---|---|---|---|---|---|---|
| | **Substanz ↓** | | | | | | |
| **1** | **H₂O** [Gew.-%] | 35 | 34,5 | 34 | 33 | 32 | 31 |
| **2** | **Al₂(SO₄)₃ · ca. 14 H₂O** [Gew.-%] | 30 | 30 | 30 | 30 | 30 | 30 |
| **3** | **Na-Aluminat B** [Gew.-%] | - | 0.5 | 1 | 2 | 3 | 4 |
| **4** | **Al₂(SO₄)₃ · ca. 14 H₂O** [Gew.-%] | 35 | 35 | 35 | 35 | 35 | 35 |

| | | | | | | | |
|---|---|---|---|---|---|---|---|
| * Vergleichsbeispiel | | | | | | | |

Die Viskosität wurden nach bestimmten Zeitpunkten gemessen. Tabelle 12 gibt eine Übersicht über die Resultate.

**Tabelle 12: Abhängigkeit der Viskosität von Menge Na-Aluminat**

| Beispiel | **26*** | **27** | **28** | **29** | **30** | **31** |
|---|---|---|---|---|---|---|
| Anteil Na-Aluminat B [Gew.-%] | 0 | 0.5 | 1 | 2 | 3 | 4 |

| | Viskosität [mPa·s] | | | | | |
|---|---|---|---|---|---|---|
| nach 4 h | 1167 | 914 | 831 | 442 | 419 | 539 |
| nach 5 h | 1076 | 843 | 770 | 453 | 392 | 512 |
| nach 6 h | 1071 | 818 | 750 | 432 | 370 | 496 |
| nach 24 h | 708 | 757 | 953 | 432 | 300 | 346 |
| nach 48 h | 368 | 365 | 414 | 270 | 233 | 335 |

| | | | | | | |
|---|---|---|---|---|---|---|
| * Vergleichsbeispiel | | | | | | |

Wie aus Tabelle 12 ersichtlich ist, kann die Viskosität der Aluminiumsulfatsuspension durch die Zugabe von Natriumaluminat selbst bei sehr hohem Gehalt an Aluminiumsulfat in den ersten Stunden signifikant reduziert werden.

### Beispiele 32 bis 37

### Herstellung von Aluminiumsulfatsuspensionen mit Natronlauge

Die Versuche wurden entsprechend den Beispielen 1 bis 4 durchgeführt, außer dass statt Natriumaluminat Natronlauge (50%) als Alkalimetallverbindung verwendet wurde, wie in Tabelle 13 gezeigt.

**Tabelle 13: Hergestellte Aluminiumsulfatsupensionen**

| **Reihenfolge** | **Beispiel →** | **32*** | **33** | **34** | **35** | **36** | **37** |
|---|---|---|---|---|---|---|---|
| | **Substanz ↓** | | | | | | |
| **1** | **H₂O** [Gew.-%] | 40 | 39 | 38 | 36 | 34 | 32 |
| **2** | **NaOH** [Gew.-%] | - | 1 | 2 | 4 | 6 | 8 |
| **3** | **Al₂(SO₄)₃ · ca. 14 H₂O** [Gew.-%] | 60 | 60 | 60 | 60 | 60 | 60 |

| | | | | | | | |
|---|---|---|---|---|---|---|---|
| * Vergleichsbeispiel | | | | | | | |

Die Viskosität wurde nach bestimmten Zeitpunkten gemessen. Tabelle 14 gibt eine Übersicht über die Resultate.

**Tabelle 14: Abhängigkeit der Viskosität von Menge NaOH**

| Beispiel | **32*** | **33** | **34** | **35** | **36** | **37** |
|---|---|---|---|---|---|---|
| Anteil NaOH [Gew.-%] | 0 | 1 | 2 | 4 | 6 | 8 |

| | Viskosität [mPa·s] | | | | | |
|---|---|---|---|---|---|---|
| nach 1 h | 966 | 447 | 201 | 72 | 49 | 53 |
| nach 2 h | 660 | 432 | 234 | 101 | 61 | 52 |
| nach 3 h | 410 | 293 | 212 | 147 | 162 | 68 |
| nach 4 h | 390 | 277 | 207 | 135 | 169 | 70 |
| nach 5 h | 328 | 228 | 179 | 103 | 169 | 70 |
| nach 6 h | 313 | 190 | 184 | 98 | 168 | 72 |
| nach 24 h | 145 | 130 | 127 | 74 | 101 | 57 |
| nach 48 h | 87 | 130 | 95 | 68 | 85 | 56 |

| | | | | | | |
|---|---|---|---|---|---|---|
| * Vergleichsbeispiel | | | | | | |

Wie aus Tabelle 14 ersichtlich ist, kann die Viskosität der Aluminiumsulfatsuspension durch die Zugabe von NaOH bei hohem Gehalt an Aluminiumsulfat in den ersten Stunden signifikant reduziert werden.

### Beispiele 38 bis 43

### Herstellung von Aluminiumsulfatsuspensionen mit Natriumcarbonat

Die Versuche wurden entsprechend den Beispielen 1 bis 4 durchgeführt, außer dass statt Natriumaluminat Natroncarbonat als Alkalimetallverbindung verwendet und die Reihenfolge geändert wurde, wie in Tabelle 15 gezeigt.

**Tabelle 15: Hergestellte Aluminiumsulfatsupensionen**

| **Reihenfolge** | **Beispiel** → | **38*** | **39** | **40** | **41** | **42** | **43** |
|---|---|---|---|---|---|---|---|
| | **Substanz ↓** | | | | | | |
| **1** | **H₂O** [Gew.-%] | 40 | 39.5 | 39 | 38 | 37 | 36 |
| **2** | **Al₂(SO₄)₃ · ca. 14 H₂O** [Gew.-%] | 60 | 60 | 60 | 60 | 60 | 60 |
| **3** | **Na₂CO₃** [Gew.-%] | - | 0.5 | 1 | 2 | 3 | 4 |

| | | | | | | | |
|---|---|---|---|---|---|---|---|
| * Vergleichsbeispiel | | | | | | | |

Die Viskosität wurden nach bestimmten Zeitpunkten gemessen. Tabelle 16 gibt eine Übersicht über die Resultate.

**Tabelle 16: Abhängigkeit der Viskosität von Menge Na₂CO₃**

| Beispiel | **38*** | **39** | **40** | **41** | **42** | **43** |
|---|---|---|---|---|---|---|
| Anteil Na₂CO₃ [Gew.-%] | 0 | 0.5 | 1 | 2 | 3 | 4 |

| | Viskosität [mPa·s] | | | | | |
|---|---|---|---|---|---|---|
| nach 1 h | 947 | 391 | 367 | 162 | 645** | 50** |
| nach 2 h | 903 | 386 | 372 | 174 | 594 | 50 |
| nach 3 h | 370 | 228 | 245 | 185 | 774 | n.b. |
| nach 4 h | 354 | 206 | 235 | 174 | 814 | n.b. |
| nach 5 h | 318 | 228 | 272 | 156 | 624 | 442 |
| nach 6 h | 313 | 217 | 262 | 168 | 629 | 437 |
| nach 24 h | 158 | 132 | 161 | 134 | 83 | 87 |
| nach 48 h | 100 | 139 | 115 | 98 | 73 | 77 |

| | | | | | | |
|---|---|---|---|---|---|---|
| * Vergleichsbeispiel, ** extrapoliert | | | | | | |

Wie aus Tabelle 16 ersichtlich ist, kann die Viskosität der Aluminiumsulfatsuspension durch die Zugabe von Na₂CO₃ bei hohem Gehalt an Aluminiumsulfat in den ersten Stunden signifikant reduziert werden.

### Beispiele 44 bis 49

### Herstellung von Aluminiumsulfatsuspensionen mit Kaliumhydroxid

Die Versuche wurden entsprechend den Beispielen 1 bis 4 durchgeführt, außer dass statt Natriumaluminat Kaliumhydroxid als Alkalimetallverbindung verwendet und die Reihenfolge geändert wurde, wie in Tabelle 17 gezeigt.

**Tabelle 17: Hergestellte Aluminiumsulfatsupensionen**

| **Reihenfolge** | **Beispiel →** | **44*** | **45** | **46** | **47** | **48** | **49** |
|---|---|---|---|---|---|---|---|
| | **Substanz ↓** | | | | | | |
| **1** | **H₂O** [Gew.-%] | 40 | 39.5 | 39 | 38 | 37 | 36 |
| **2** | **Al₂(SO₄)₃ · ca. 14 H₂O** [Gew.-%] | 60 | 60 | 60 | 60 | 60 | 60 |
| **3** | **KOH** [Gew.-%] | - | 0.5 | 1 | 2 | 3 | 4 |

| | | | | | | | |
|---|---|---|---|---|---|---|---|
| * Vergleichsbeispiel | | | | | | | |

Die Viskosität wurden nach bestimmten Zeitpunkten gemessen. Tabelle 18 gibt eine Übersicht über die Resultate.

**Tabelle 18: Abhängigkeit der Viskosität von Menge KOH**

| Beispiel | **44*** | **45** | **46** | **47** | **48** | **49** |
|---|---|---|---|---|---|---|
| Anteil KOH [Gew.-%] | 0 | 0.5 | 1 | 2 | 3 | 4 |

| | Viskosität [mPa·s] | | | | | |
|---|---|---|---|---|---|---|
| nach 1 h | 1385 | 731 | n.b. | 207 | 65** | - |
| nach 2 h | 968 | n.b. | 360 | 218 | 80 | 42 |
| nach 3 h | 657 | n.b. | 360 | 212 | 78 | 50 |
| nach 4 h | 502 | 344 | 292 | 229 | 85 | 72 |
| nach 5 h | 426 | 271 | 217 | 207 | 82 | 86** |
| nach 6 h | 406 | 234 | 195 | 201 | 88 | 100 |
| nach 24 h | 182 | 117 | 155 | 192 | 53 | 78 |
| nach 48 h | 80 | 73 | 115 | 187 | 60 | 79 |

| | | | | | | |
|---|---|---|---|---|---|---|
| * Vergleichsbeispiel, ** extrapoliert | | | | | | |

Wie aus Tabelle 18 ersichtlich ist, kann die Viskosität der Aluminiumsulfatsuspension durch die Zugabe von KOH bei hohem Gehalt an Aluminiumsulfat in den ersten Stunden signifikant reduziert werden.

### Beispiele 50 bis 55

### Herstellung von Aluminiumsulfatsuspensionen mit Lithiumhydroxid

Die Versuche wurden entsprechend den Beispielen 1 bis 4 durchgeführt, außer dass statt Natriumaluminat Lithiumhydroxid als Alkalimetallverbindung verwendet und die Reihenfolge geändert wurde, wie in Tabelle 19 gezeigt.

**Tabelle 19: Hergestellte Aluminiumsulfatsupensionen**

| **Reihenfolge** | **Beispiel →** | **50*** | **51** | **52** | **53** | **54** | **55** |
|---|---|---|---|---|---|---|---|
| | **Substanz ↓** | | | | | | |
| **1** | **H₂O** [Gew.-%] | 40 | 39.5 | 39 | 38 | 37 | 36 |
| **2** | **Al₂(SO₄)₃ · ca. 14 H₂O** [Gew.-%] | 60 | 60 | 60 | 60 | 60 | 60 |
| **3** | **LiOH** [Gew.-%] | - | 0.5 | 1 | 2 | 3 | 4 |

| | | | | | | | |
|---|---|---|---|---|---|---|---|
| * Vergleichsbeispiel | | | | | | | |

Die Viskosität wurde nach bestimmten Zeitpunkten gemessen. Tabelle 20 gibt eine Übersicht über die Resultate.

**Tabelle 20: Abhängigkeit der Viskosität von Menge LiOH**

| Beispiel | **50*** | **51** | **52** | **53** | **54** | **55** |
|---|---|---|---|---|---|---|
| Anteil LiOH [Gew.-%] | 0 | 0.5 | 1 | 2 | 3 | 4 |

| | Viskosität [mPa·s] | | | | | |
|---|---|---|---|---|---|---|
| nach 1 h | 767 | 345 | 93 | *** | *** | *** |
| nach 2 h | 767 | 365 | 184 | *** | *** | 86 |
| nach 3 h | 578 | 287 | 184 | 50** | *** | 178 |
| nach 4 h | 412 | 228 | 173 | 79 | 65 | 99 |
| nach 5 h | 376 | 137 | 161 | 99 | 65 | 119 |
| nach 6 h | 324 | 178 | 161 | 93 | 72 | 99 |
| nach 24 h | 133 | 101 | 105 | 81 | 71 | 86 |
| nach 48 h | 95 | 157 | 77 | 72 | 72 | 90 |

| | | | | | | |
|---|---|---|---|---|---|---|
| * Vergleichsbeispiel, ** Wert ungenau, *** gemessene Zeit für ISO Nr. 6 zu kurz (d.h. für Messmethode zu geringe Viskosität) | | | | | | |

Wie aus Tabelle 20 ersichtlich ist, kann die Viskosität der Aluminiumsulfatsuspension durch die Zugabe von LiOH bei hohem Gehalt an Aluminiumsulfat in den ersten Stunden signifikant reduziert werden.

### Beispiele 56 bis 61

### Herstellung von Aluminiumsulfatsuspensionen mit Kaliumhydrogencarbonat

Die Versuche wurden entsprechend den Beispielen 1 bis 4 durchgeführt, außer dass statt Natriumaluminat Kaliumhydrogencarbonat als Alkalimetallverbindung verwendet und die Reihenfolge geändert wurde, wie in Tabelle 21 gezeigt.

**Tabelle 21: Hergestellte Aluminiumsulfatsupensionen**

| **Reihenfolge** | **Beispiel →** | **56*** | **57** | **58** | **59** | **60** | **61** |
|---|---|---|---|---|---|---|---|
| | **Substanz ↓** | | | | | | |
| **1** | **H₂O** [Gew.-%] | 40 | 39.5 | 39 | 38 | 37 | 36 |
| **2** | **Al₂(SO₄)₃ · ca. 14 H₂O** [Gew.-%] | 60 | 60 | 60 | 60 | 60 | 60 |
| **3** | **KHCO₃** [Gew.-%] | - | 0.5 | 1 | 2 | 3 | 4 |

| | | | | | | | |
|---|---|---|---|---|---|---|---|
| * Vergleichsbeispiel | | | | | | | |

Die Viskosität wurden nach bestimmten Zeitpunkten gemessen. Tabelle 22 gibt eine Übersicht über die Resultate.

**Tabelle 22: Abhängigkeit der Viskosität von Menge KHCO₃**

| Beispiel | **50*** | **51** | **52** | **53** | **54** | **55** |
|---|---|---|---|---|---|---|
| Anteil KHCO₃ [Gew.-%] | 0 | 0.5 | 1 | 2 | 3 | 4 |

| | Viskosität [mPa·s] | | | | | |
|---|---|---|---|---|---|---|
| nach 1 h | 677 | 662 | 391 | 239 | 93 | 106 |
| nach 2 h | 657 | 653 | 427 | 239 | 119 | 131 |
| nach 3 h | 498 | 452 | 355 | 245 | 131 | 131 |
| nach 4 h | 422 | 401 | 303 | 217 | 119 | 106 |
| nach 5 h | 386 | 335 | 261 | 206 | 131 | 119 |
| nach 6 h | 314 | 298 | 223 | 190 | 125 | 112 |
| nach 24 h | 157 | 154 | 144 | 133 | 98 | 103 |
| nach 48 h | 94 | 101 | 112 | 106 | 90 | 108 |

| | | | | | | |
|---|---|---|---|---|---|---|
| * Vergleichsbeispiel | | | | | | |

Wie aus Tabelle 22 ersichtlich ist, kann die Viskosität der Aluminiumsulfatsuspension durch die Zugabe von Kaliumhydrogencarbonat bei hohem Gehalt an Aluminiumsulfat in den ersten Stunden signifikant reduziert werden.

### Zusammenfassung der Ergebnisse

Wie aus den Beispielen ersichtlich ist, kann die Viskosität der Aluminiumsulfatsuspension durch die Zugabe von löslichen Alkalimetallverbindungen auch bei hohem Gehalt an Aluminiumsulfat in den ersten Stunden signifikant reduziert werden. Insbesondere können die häufig zu Beginn auftretenden Spitzenwerte der Viskosität vermieden werden.

Entsprechend lässt sich mit einer löslichen Alkaliverbindung die Viskosität einer Aluminiumsulfatsuspension gezielt einstellen. Die Zugabereihenfolge und die Aufteilung der Komponenten spielen keine wesentliche Rolle.

Alle Versuche erfolgten bei Raumtemperatur. Bekanntermassen lässt sich im Allgemeinen durch eine Erwärmung eine Verringerung der Viskosität erreichen, dies ist aber aufgrund des notwendigen Verbrauchs an Energie und Zeit nicht erwünscht. Durch den erfindungsgemäßen Einsatz der löslichen Alkalimetallverbindungen kann eine Erwärmung auf eine geringere Temperatur ausreichen oder eine Erwärmung kann ganz vermieden werden.

Zudem hat sich gezeigt, dass sich die Viskositäten der so hergestellten Aluminiumsulfatsuspension während 3 Monaten aufrechterhalten lassen, ohne dass sich diese signifikant ändern.

Die vorstehend beschriebenen Aluminiumsulfatsuspensionen haben sich als geeignete Beschleuniger für Spritzbeton und Spritzmörtel herausgestellt.

## Patentansprüche

1. Verwendung mindestens einer löslichen Alkalimetallverbindung zur Einstellung, insbesondere zur Reduktion, der Viskosität einer Aluminiumsulfatsuspension, wobei das Alkalimetall aus Natrium, Kalium und/oder Lithium ausgewählt ist.

2. Verwendung nach Anspruch 1, wobei die Aluminiumsulfatsuspension ein Erstarrungs- und/oder Erhärtungsbeschleuniger für eine mineralisches Bindemittel enthaltende Zusammensetzung ist, wobei die Aluminiumsulfatsuspension bevorzugt ein Spritzbetonbeschleuniger ist.

3. Verwendung nach wenigstens einem der vorangehenden Ansprüche, wobei die Alkalimetallverbindung ein Aluminat, Oxid, Hydroxid, Carbonat, Hydrogencarbonat, Nitrat, Sulfat, Phosphat, Halogenid, Formiat, Citrat, Thiocyanat, Silikat und/oder Acetat ist.

4. Verwendung nach wenigstens einem der vorangehenden Ansprüche, wobei die Alkalimetallverbindung ausgewählt ist aus Natriumaluminat, Natriumcarbonat, Natriumbicarbonat, Natriumoxid, Natriumhydroxid, Kaliumaluminat, Kaliumcarbonat, Kaliumbicarbonat, Kaliumoxid, Kaliumhydroxid, Lithiumaluminat, Lithiumcarbonat, Lithiumbicarbonat, Lithiumoxid, Lithiumhydroxid oder einer Mischung davon.

5. Verwendung nach wenigstens einem der vorangehenden Ansprüche, wobei eine Menge der mindestens einen Alkalimetallverbindung derart gewählt wird, dass die Alkalimetallatome, bezogen auf das Gesamtgewicht der Aluminiumsulfatsuspension, einen Anteil von 0.02 - 5 Gew.-%, insbesondere 0.05 - 3 Gew.-%, besonders bevorzugt 0.1 - 1.4 Gew.-%, im Speziellen 0.2 - 0.7 Gew.-%, aufweisen.

6. Verwendung nach wenigstens einem der vorangehenden Ansprüche, wobei die Aluminiumsulfatsuspension, bezogen auf das Gesamtgewicht der Aluminiumsulfatsuspension, einen Anteil an Sulfat (SO₄⁻) von 19 - 40 Gew.-%, insbesondere 24 - 36 Gew.-%, im Speziellen 28 - 34 Gew.-%, aufweist und wobei die Aluminiumsulfatsuspension, bezogen auf das Gesamtgewicht der Aluminiumsulfatsuspension, einen Anteil an Aluminium (Al) von 3.5 - 10 Gew.- %, insbesondere 4.5 - 8.7 Gew.-%, im Besonderen 5.4 - 7 Gew.-%, aufweist.

7. Verwendung nach wenigstens einem der vorangehenden Ansprüche, wobei die Aluminiumsulfatsuspension, bezogen auf das Gesamtgewicht der Aluminiumsulfatsuspension, 22 - 46 Gew.-%, insbesondere 28 - 43 Gew.-%, bevorzugt 34 - 41 Gew.-%, Aluminiumsulfat (Al₂(SO₄)₃) enthält.

8. Verwendung nach wenigstens einem der vorangehenden Ansprüche, wobei die Aluminiumsulfatsuspension, bezogen auf das Gesamtgewicht der Aluminiumsulfatsuspension, 0.01 - 15 Gew.-%, bevorzugt 0.1 - 5 Gew.-%, im Speziellen 0.2 - 2 Gew.-% Aluminiumhydroxid enthält.

9. Verwendung nach wenigstens einem der vorangehenden Ansprüche, wobei ein Molverhältnis von Aluminium zu Sulfat der Aluminiumsulfatsuspension kleiner oder gleich 0.9, bevorzugt kleiner oder gleich 0.85, mehr bevorzugt kleiner oder gleich 0.8, noch mehr bevorzugt kleiner oder gleich 0.74, ganz besonders bevorzugt kleiner oder gleich 0.7, insbesondere 2:3, beträgt.

10. Verwendung nach wenigstens einem der vorangehenden Ansprüche, wobei die Aluminiumsulfatsuspension zudem 0.1 - 15 Gew.-%, bevorzugt 0.1 - 5 Gew.-%, im Speziellen 0.2 - 2 Gew.-%, bezogen auf das Gesamtgewicht der Aluminiumsulfatsuspension, an Alkanolamin enthält, wobei das Alkanolamin vorteilhafterweise Monoethanolamin, Diethanolamin, Triethanolamin und/oder Methyl-diisopropanolamin ist.

11. Verwendung nach wenigstens einem der vorangehenden Ansprüche, wobei die Alkalimetallverbindung in Form eines Pulvers oder in Form einer wässrigen Lösung zur Aluminiumsulfatsuspension oder während der Herstellung der Aluminiumsulfatsuspension zugesetzt wird.

12. Verwendung nach wenigstens einem der vorangehenden Ansprüche, wobei die Alkalimetallverbindung zur Reduktion der Viskosität in Kombination mit einer Calciumverbindung oder einer Magnesiumverbindung eingesetzt wird.

13. Verwendung nach wenigstens einem der vorangehenden Ansprüche, wobei die Calciumverbindung oder Magnesiumverbindung ein Oxid, Hydroxid, Carbonat, Nitrat, Sulfat, Phosphat, Halogenid, Formiat, Acetat und/oder Citrat ist.

14. Verwendung nach wenigstens einem der vorangehenden Ansprüche, wobei die Calciumverbindung Calciumcarbonat, Calciumoxid und/oder Calciumhydroxid ist und die Magnesiumverbindung Magnesiumcarbonat, Magnesiumoxid und/oder Magnesiumhydroxid ist.

15. Verwendung nach wenigstens einem der vorangehenden Ansprüche, wobei eine Menge der Calciumverbindung oder Magnesiumverbindung derart gewählt wird, dass die Calciumatome bzw. Magnesiumatome, bezogen auf das Gesamtgewicht der Aluminiumsulfatsuspension, einen Anteil von 0.001 - 4 Gew.-%, bevorzugt 0.01 - 2 Gew.-%, insbesondere 0.07 - 1.4 Gew.-%, im Speziellen 0.1 - 0.7 Gew.-%, aufweisen.

## Claims

1. Use of at least one soluble alkali metal compound for adjusting, more particularly for reducing, the viscosity of an aluminum sulfate suspension, wherein the alkali metal is selected from sodium, potassium and/or lithium.

2. Use according to Claim 1, wherein the aluminum sulfate suspension is a solidification accelerator and/or hardening accelerator for a composition comprising a mineral binder, wherein the aluminum sulfate suspension is preferably a spray concrete accelerator.

3. Use according to either of the preceding claims, wherein the alkali metal compound is an aluminate, oxide, hydroxide, carbonate, hydrogen carbonate, nitrate, sulfate, phosphate, halide, formate, citrate, thiocyanate, silicate and/or acetate.

4. Use according to at least one of the preceding claims, wherein the alkali metal compound is selected from sodium aluminate, sodium carbonate, sodium bicarbonate, sodium oxide, sodium hydroxide, potassium aluminate, potassium carbonate, potassium bicarbonate, potassium oxide, potassium hydroxide, lithium aluminate, lithium carbonate, lithium bicarbonate, lithium oxide, lithium hydroxide or a mixture thereof.

5. Use according to at least one of the preceding claims, wherein an amount of the at least one alkali metal compound is chosen such that the alkali metal atoms, based on the total weight of the aluminum sulfate suspension, have a proportion of 0.02-5% by weight, more particularly 0.05-3% by weight, particularly preferably 0.1-1.4% by weight, especially 0.2-0.7% by weight.

6. Use according to at least one of the preceding claims, wherein the aluminum sulfate suspension, based on the total weight of the aluminum sulfate suspension, has a proportion of sulfate (SO₄⁻) of 19-40% by weight, more particularly 24-36% by weight, especially 28-34% by weight, and wherein the aluminum sulfate suspension, based on the total weight of the aluminum sulfate suspension, has a proportion of aluminum (Al) of 3.5-10% by weight, more particularly 4.5-8.7% by weight, in particular 5.4-7% by weight.

7. Use according to at least one of the preceding claims, wherein the aluminum sulfate suspension, based on the total weight of the aluminum sulfate suspension, contains 22-46% by weight, more particularly 28-43% by weight, preferably 34-41% by weight, of aluminum sulfate (Al₂(SO₄)₃).

8. Use according to at least one of the preceding claims, wherein the aluminum sulfate suspension, based on the total weight of the aluminum sulfate suspension, contains 0.01-15% by weight, preferably 0.1-5% by weight, especially 0.2-2% by weight, of aluminum hydroxide.

9. Use according to at least one of the preceding claims, wherein a molar ratio of aluminum to sulfate in the aluminum sulfate suspension is less than or equal to 0.9, preferably less than or equal to 0.85, more preferably less than or equal to 0.8, even more preferably less than or equal to 0.74, very particularly preferably less than or equal to 0.7, in particular 2:3.

10. Use according to at least one of the preceding claims, wherein the aluminum sulfate suspension additionally contains 0.1-15% by weight, preferably 0.1-5% by weight, especially 0.2-2% by weight, based on the total weight of the aluminum sulfate suspension, of an alkanolamine, wherein the alkanolamine is advantageously monoethanolamine, diethanolamine, triethanolamine and/or methyldiisopropanolamine.

11. Use according to at least one of the preceding claims, wherein the alkali metal compound is added to the aluminum sulfate suspension or during the production of the aluminum sulfate suspension in powder form or as an aqueous solution.

12. Use according to at least one of the preceding claims, wherein the alkali metal compound is used for reducing viscosity in combination with a calcium compound or a magnesium compound.

13. Use according to at least one of the preceding claims, wherein the calcium compound or magnesium compound is an oxide, hydroxide, carbonate, nitrate, sulfate, phosphate, halide, formate, acetate and/or citrate.

14. Use according to at least one of the preceding claims, wherein the calcium compound is calcium carbonate, calcium oxide and/or calcium hydroxide and the magnesium compound is magnesium carbonate, magnesium oxide and/or magnesium hydroxide.

15. Use according to at least one of the preceding claims, wherein an amount of the calcium compound or magnesium compound is chosen such that the calcium atoms or magnesium atoms, based on the total weight of the aluminum sulfate suspension, have a proportion of 0.001-4% by weight, preferably 0.01-2% by weight, more particularly 0.07-1.4% by weight, especially 0.1-0.7% by weight.

## Revendications

1. Utilisation d'au moins un composé soluble d'un métal alcalin pour ajuster, en particulier pour réduire la viscosité d'une suspension de sulfate d'aluminium, le métal alcalin étant choisi parmi le sodium, le potassium et/ou le lithium.

2. Utilisation selon la revendication 1, la suspension de sulfate d'aluminium étant un accélérateur de prise et/ou de durcissement pour une composition contenant un liant minéral, la suspension de sulfate d'aluminium étant de préférence un accélérateur de béton projeté.

3. Utilisation selon au moins l'une des revendications précédentes, le composé d'un métal alcalin étant un aluminate, un oxyde, un hydroxyde, un carbonate, un hydrogénocarbonate, un nitrate, un sulfate, un phosphate, un halogénure, un formiate, un citrate, un thiocyanate, un silicate et/ou un acétate.

4. Utilisation selon au moins l'une des revendications précédentes, le composé d'un métal alcalin étant choisi parmi l'aluminate de sodium, le carbonate de sodium, le bicarbonate de sodium, l'oxyde de sodium, l'hydroxyde de sodium, l'aluminate de potassium, le carbonate de potassium, le bicarbonate de potassium, l'oxyde de potassium, l'hydroxyde de potassium, l'aluminate de lithium, le carbonate de lithium, le bicarbonate de lithium, l'oxyde de lithium, l'hydroxyde de lithium ou un mélange de ceux-ci.

5. Utilisation selon au moins l'une des revendications précédentes, une quantité de l'au moins un composé d'un métal alcalin étant choisie de façon que les atomes de métal alcalin présentent, par rapport au poids total de la suspension de sulfate d'aluminium, une proportion de 0,02 à 5 % en poids, en particulier de 0,05 à 3 % en poids, d'une manière particulièrement préférée de 0,1 à 1,4 % en poids, spécialement de 0,2 à 0,7 % en poids.

6. Utilisation selon au moins l'une des revendications précédentes, la suspension de sulfate d'aluminium présentant, par rapport au poids total de la suspension de sulfate d'aluminium, une proportion de sulfate (SO₄⁻) de 19 à 40 % en poids, en particulier de 24 à 36 % en poids, spécialement de 28 à 34 % en poids, et la suspension de sulfate d'aluminium présentant, par rapport au poids total de la suspension de sulfate d'aluminium, une proportion d'aluminium (Al) de 3,5 à 10 % en poids, en particulier de 4,5 à 8,7 % en poids, particulièrement de 5,4 à 7 % en poids.

7. Utilisation selon au moins l'une des revendications précédentes, la suspension de sulfate d'aluminium contenant, par rapport au poids total de la suspension de sulfate d'aluminium, 22 à 46 % en poids, en particulier 28 à 43 % en poids, de préférence 34 à 41 % en poids de sulfate d'aluminium (Al₂(SO₄)₃).

8. Utilisation selon au moins l'une des revendications précédentes, la suspension de sulfate d'aluminium contenant, par rapport au poids total de la suspension de sulfate d'aluminium, 0,01 à 15 % en poids, de préférence de 0,1 à 5 % en poids, spécialement 0,2 à 2 % en poids d'hydroxyde d'aluminium.

9. Utilisation selon au moins l'une des revendications précédentes, un rapport en moles de l'aluminium au sulfate de la suspension de sulfate d'aluminium étant inférieur ou égal à 0,9, de préférence inférieur ou égal à 0,85, plus préférentiellement inférieur ou égal à 0,8, encore plus préférentiellement inférieur ou égal à 0,74, d'une manière particulièrement préférée inférieur ou égal à 0,7, en particulier de 2:3.

10. Utilisation selon au moins l'une des revendications précédentes, la suspension de sulfate d'aluminium contenant en outre 0,1 à 15 % en poids, de préférence 0,1 à 5 % en poids, spécialement 0,2 à 2 % en poids, par rapport au poids total de la suspension de sulfate d'aluminium, d'une alcanolamine, l'alcanolamine étant avantageusement la monoéthanolamine, la diéthanolamine, la triéthanolamine et/ou la méthyldiisopropanolamine.

11. Utilisation selon au moins l'une des revendications précédentes, le composé d'un métal alcalin étant, sous forme d'une poudre ou sous forme d'une solution aqueuse, ajouté à la suspension de sulfate d'aluminium ou pendant la fabrication de la suspension de sulfate d'aluminium.

12. Utilisation selon au moins l'une des revendications précédentes, le composé d'un métal alcalin étant utilisé pour réduire la viscosité en combinaison avec un composé du calcium ou un composé du magnésium.

13. Utilisation selon au moins l'une des revendications précédentes, le composé du calcium ou le composé du magnésium étant un oxyde, un hydroxyde, un carbonate, un nitrate, un sulfate, un phosphate, un halogénure, un formiate, un acétate et/ou un citrate.

14. Utilisation selon au moins l'une des revendications précédentes, le composé du calcium étant le carbonate de calcium, l'oxyde de calcium et/ou l'hydroxyde de calcium et le composé du magnésium étant le carbonate de magnésium, l'oxyde de magnésium et/ou l'hydroxyde de magnésium.

15. Utilisation selon au moins l'une des revendications précédentes, une quantité du composé du calcium ou du composé du magnésium étant choisie de façon que les atomes de calcium ou les atomes de magnésium présentent, par rapport au poids total de la suspension de sulfate d'aluminium, une proportion de 0,001 à 4 % en poids, de préférence de 0,01 à 2 % en poids, en particulier de 0,07 à 1,4 % en poids, spécialement de 0,1 à 0,7 % en poids.
